# EUROPÄISCHE PATENTSCHRIFT

(11) **EP 0 429 593 B1**
(45) Veröffentlichungstag und Bekanntmachung des Hinweises auf die Patenterteilung: **01.09.1993**
(21) Anmeldenummer: 90908466.7
(22) Anmeldetag: 05.06.1990
(51) Int. Cl.: B01D 17/025, E03F 5/16, C02F 1/40

(54) **LEICHTFLÜSSIGKEITSABSCHEIDER**
DEVICE FOR SEPARATING LIGHT LIQUIDS
SEPARATEUR DE LIQUIDES LEGERS

(30) Priorität: 06.06.1989 DE 3918343; 26.07.1989 DE 3924787; 11.09.1989 DE 3930226
(43) Veröffentlichungstag der Anmeldung: 05.06.1991
(73) Patentinhaber: Hammerschmitt, Nikolaus, D-53879 Euskirchen (DE)
(72) Erfinder: Hammerschmitt, Nikolaus, D-53879 Euskirchen (DE)
(74) Vertreter: Döring, Wolfgang, Dr.-Ing. Patentanwälte Hauck, Graalfs, Wehnert, Döring, Siemons
(86) Internationale Anmeldenummer: DE9000429
(87) Internationale Veröffentlichungsnummer: WO9014874

(56) Entgegenhaltungen:
- EP-A- 0 201 072
- EP-A- 0 308 949
- FR-A- 2 481 608

## Beschreibung

Die vorliegende Erfindung betrifft einen Leichtflüssigkeitsabscheider mit einem Zulauf für ein Leichtflüssigkeits-Schwerflüssigkeits-Gemisch, mindestens einer dem Zulauf nachgeordneten Abscheidekammer für die Leichtflüssigkeit von der Schwerflüssigkeit, einem der Abscheidekammer nachgeordneten Schwerflüssigkeitsablauf, dem eine Übeilaufwand vorgeordnet ist, einem Leichtflüssigkeitsablauf umfassend einen Leichtflüssigkeitsausgleichraum, ein von einem unterhalb der Überlaufwand gelegenen Punkt der Abscheidekammer nach unten in den Leichtflüssigkeitsausgleichsraum führendes Tauchrohr und ein vom Leichtflüssigkeitsausgleichsraum nach oben führendes Leichtflüssigkeitsablaufrohr, sowie einem Leichtflüssigkeitsspeicher, mit dem das Leichtflüssigkeitsablaufrohr in Verbindung steht.

Ein solcher Leichtflüssigkeitsabscheider ist beispielsweise aus der EP-A-0 308 949 bekannt. Bei diesem bekannten Abscheider gelangt die Schwerflüssigkeit über die entsprechende Überlaufwand in den Schwerflüssigkeitsablauf. Unterhalb der Überlaufkante dieser Überlaufwand ist eine kleine Durchtrittsöffnung vorgesehen, die bewirkt, daß der Schwerflüssigkeitsspiegel bei Erreichen der Überlaufkante der Überlaufwand und aufhörendem Gemischzustrom weiter abfällt und sich im Ruhezustand auf dem Niveau der Sohle der Durchtrittsöffnung einstellt. Bei entsprechendem Zulauf steigt der Schwerflüssigkeitsspiegel wieder an, so daß die Schwerflüssigkeit dann wieder über die Überlaufkante abfließt. Es entstehen hierdurch permanente Schwerflüssigkeitsspiegelschwankungen, die man sich zum Ablauf der Leichtflüssigkeit zunutzemacht.

Wenn im Ruhezustand des Abscheiders der Schwerflüssigkeitsspiegel seinen untersten Stand (Sohle der kleinen Durchtrittsöffnung) erreicht hat, kann hierbei noch Leichtflüssigkeit in der Abscheidekammer verbleiben, die erst nach einem erneuten Gemischzufluß über den Leichtflüssigkeitsablauf entfernt wird.

Der Erfindung liegt die Aufgabe zugrunde, einen Leichtflüssigkeitsabscheider der angegebenen Art zu schaffen, der in bezug auf die Entfernung der Leichtflüssigkeit aus der Abscheidekammer besonders wirksam ist. Insbesondere soll ein solcher Leichtflüssigkeitsabscheider zur Verfügung gestellt werden, bei dem im Ruhezustand des Abscheiders keine Leichtflüssigkeit mehr in der Abscheidekammer verbleibt.

Diese Aufgabe wird erfindungsgemäß bei einem Leichtflüssigkeitsabscheider der eingangs beschriebenen Art dadurch gelöst, daß zwischen der Sohle des Schwerflüssigkeitsablaufes und der Oberkante des Tauchrohres eine den Leichtflüssigkeitsausgleichsraum mit dem Schwerflüssigkeitsablauf verbindende kleine Durchtrittsöffnung angeordnet ist.

Bei der erfindungsgemäß ausgebildeten Ausführungsform steht somit der Leichtflüssigkeitsausgleichsraum mit dem Schwerflüssigkeitsablauf in Verbindung. Die Abscheidekammer als solche besitzt keine kleine Durchtrittsöffnung zum Schwerflüssigkeitsablauf, wie dies beim eingangs zitierten Stand der Technik der Fall ist. Der tiefste Flüssigkeitsstand in der Abscheidekammer ist somit durch die Oberkante des in den Leichtflüssigkeitsausgleichsraum mündenden Tauchrohres festgelegt. Es entsteht dabei ein unverdrängbarer Raum. Aufgrund der Verbindung zwischen dem Leichtflüssigkeitsausgleichraum und dem Schwerflüssigkeitsablauf fließt Schwerflüssigkeit aus dem Leichtflüssigkeitsausgleichsraum so lange in den Schwerflüssigkeitsablauf ab, bis die Sohle der kleinen Durchtrittsöffnung erreicht ist. Es stellt sich dann im Leichtflüssigkeitsausgleichsraum ein entsprechender Schwerflüssigkeitsspiegel ein, der niedriger angeordnet ist als der Schwerflüssigkeitspiegel in der eigentlichen Abscheidekammer. Dieser Niveauunterschied bewirkt, daß die sich bei zuströmendem Gemisch in der Abscheidekammer ansammelnde Leichtflüssigkeit über das nach unten führende Tauchrohr in den Leichtflüssigkeitssammelraum abgedrückt wird und dann über das aus diesem Raum führende Leichtflüssigkeitsablaufrohr dem Leichtflüssigkeitsspeicher zugeführt wird.

Im einzelnen funktioniert der Abscheider dabei so:
Im Ruhezustand des Abscheiders nimmt der Flüssigkeitsspiegel der Abscheidekammer ein Niveau ein, das mit der Oberkante des Tauchrohres zusammenfällt. Weiter abfallen kann der Flüssigkeitspiegel nicht, da die Kammer keine tiefer gelegene Austrittsöffnung aufweist. Im Ruhezustand besitzt ferner der Flüssigkeitsspiegel innerhalb des Leichtflüssigkeitsausgleichsraumes ein mit der Sohle der kleinen Durchtrittsöffnung zusammenfallendes Niveau. Bei zuströmendem Gemisch erfolgt in der Kammer ein entsprechender Abscheidevorgang, wobei die Leichtflüssigkeit durch die Schwerflüssigkeit aufsteigt und sich auf dieser als Leichtflüssigkeitschicht sammelt. Ein direkter Austritt der Leichtflüssigkeit über die Überlaufkante der Überlaufwand in den Schwerflüssigkeitsablauf wird durch eine der Überlaufwand vorgeordnete Tauchwand verhindert, so daß nur Schwerflüssigkeit die Tauchwand unterströmen kann. Durch den entsprechenden Unterschied des Schwerflüssigkeitsniveaus im Leichtflüssigkeitsausgleichsraum und in der Abscheidekammer wird die sich in der Abscheidekammer ansammelnde Leichtflüssigkeit durch das Tauchrohr nach unten in den Leichtflüssigkeitsausgleichsraum gedrückt, durchströmt die dort befindliche Schwerflüssigkeit und gelangt über das Leichtflüssigkeitsablaufrohr in den Leichtflüssigkeitsspeicher. Diese erste Betriebsphase, in der die Schwerflüssigkeit die Überlaufkante der Überlaufwand überströmt, ist beendet, wenn bei nachlassendem Zulauf der Schwerflüssigkeitsspiegel die Überlaufkante erreicht. In der zweiten Betriebsphase sinkt der Schwerflüssigkeitspiegel weiter ab und drückt Leichtflüssigkeit weiter durch das Tauchrohr in den Leichtflüssigkeitsausgleichsraum, bis sich der Schwerflüssigkeitsspiegel der Abscheidekammer und der Schwerflüssigkeitsspiegel im Leichtflüssigkeitsausgleichsraum einander angeglichen haben und der Schwerflüssigkeitsspiegel in der Abscheidekammer mit der Oberkante des Tauchrohres übereinstimmt. In diesem Zustand ist die gesamte, in der Abscheidekammer befindliche Leichtflüssigkeitssäule aus dieser über das Tauchrohr herausgedrückt worden. Es beginnt nunmehr die dritte Betriebsphase, in der der Schwerflüssigkeitsspiegel im Leichtflüssigkeitsausgleichsraum aufgrund der Verbindung über die kleine Durchtrittsöffnung weiter abfällt, bis das Niveau der Sohle der Durchtrittsöffnung erreicht ist. Dieser Schwerflüssigkeitsspiegel im Leichtflüssigkeitsausgleichsraum entspricht dem Ruhezustand des Abscheiders.

Erfindungsgemäß ist der Abstand zwischen der Oberkante des Tauchrohres und der Sohle der kleine Durchtrittsöffnung so bemessen, daß die gesamte in der Abscheidekammer befindliche Leichtflüssigkeit durch das Tauchrohr in den Leichtflüssigkeitsausgleichsraum abgeführt wird. Damit ist sichergestellt, daß bei jeder Inbetriebnahme des Leichtflüssigkeitsabscheiders keine Leichtflüssigkeit mehr in der Abscheidekammer vorhanden ist, so daß eine sehr rasche Abführung der Leichtflüssigkeit erfolgt, d. h. bei jeder Zuströmphase wird die gesamte, hiermit zuströmende Leichtflüssigkeit aus der Abscheidekammer entfernt. Der entsprechende Abstand ist je nach Dichte der Leichtfüssigkeit empirisch zu ermitteln.

Die Oberkante des in den Leichtflüssigkeitsausgleichsraum führenden Tauchrohres gibt somit den Schwerflüssigkeitsspiegel in der Abscheidekammer im Ruhezustand vor.

Um zu verhindern, daß über die kleine Durchtrittsöffnung Leichtflüssigkeit mit aus dem Leichtflüssigkeitsausgleichsraum in den Schwerflüssigkeitsablauf austritt, ist in Weiterbildung der Erfindung innerhalb des Leichtflüssigkeitsausgleichsraumes vor der kleinen Durchtrittsöffnung eine eine untere Durchflußöffnung vorsehende Tauchwand angeordnet. Die entsprechende Durchflußöffnung der Tauchwand ist dabei unterhalb der Unterkante des Tauchrohres angeordnet, so daß die aus dem Tauchrohr austretende Leichtflüssigkeit in keiner Weise zur Durchtrittsöffnung gelangen kann.

Die Oberkante des Tauchrohres ist zweckmäßigerweise unterhalb der Zulaufsohle angeordnet. Hierdurch werden im Ruhezustand des Abscheiders Rückstauerscheinungen im Zulauf vermieden.

In Weiterbildung der Erfindung ist der Leichtflüssigkeitsausgleichsraum als innerhalb der Abscheidkammer angeordnete abgetrennte Kammer ausgebildet, von deren Deckwand das Tauchrohr nach unten und das Leichtflüssigkeitsablaufrohr nach oben abgehen. Die den Leichtflüssigkeitsausgleichsraum bildende Kammer ist dabei an einer Seitenwand des Abscheiders angeordnet und grenzt an eine Stirnwand des Schwerflüssigkeitsablaufes, in der die kleine Durchtrittsöffnung angeordnet ist. Die Oberseite der Deckwand der den Leichtflüssigkeitsausgleichsraum bildenden Kammer fällt dabei mit der Oberkante des Tauchrohres zusammen, so daß die entsprechende Oberkante der Kammer den Schwerflüssigkeitsspiegel in der Abscheidekammer im Ruhezustand festlegt. Bei zuströmendem Gemisch wird dabei die Kammer überströmt, d. h. die gesamte Breite des Abscheiders wird genutzt. Das Tauchrohr ist dabei im Abstand von der Seitenwand des Abscheiders angeordnet, so daß es von allen Seiten angeströmt werden kann. Die Anordnung der Kammer an einer Seitenwand des Abscheiders hat den weiteren Vorteil, daß eine Seitewand des Abscheiders gleichzeitig als Begrenzungswand der Kammer genutzt werden kann.

Vorzugsweise ist der Leichtflüssigkeitsspeicher in Gemisch-Strömungsrichtung hinter dem Leichtflüssigkeitsausgleichsraum an der gleichen Seitenwand des Abscheiders angeordnet. Hierbei bilden somit die Innenwand des Speichers und die Innenwand der den Leichtflüssigkeitsausgleichsraum bildenden Kammer eine durchlaufende Wand ohne Vorsprünge und Rücksprünge, was sich günstig auf die Abscheidefunktion auswirkt.

Bei dem erfindungsgemäß ausgebildeten Abscheider werden somit wiederum künstliche Schwerflüssigkeitsspiegelschwankungen erzeugt, die einen entsprechenden Leichtflüssigkeitsablauf bewirken, ohne daß hierfür Pumpen etc. verwendet werden müssen. Diese künstlich erzeugten Schwerflüssigkeitsspiegelschwankungen finden bei der erfindungsgemäßen Ausführungsform ausschließlich im Leichtflüssigkeitsausgleichsraum statt, während der gesamte zur Verfügung stehende Abscheideraum hiervon nicht betroffen ist. Dort ist vielmehr ein unverdrängbarer Raum vorhanden, der durch die Oberkante des Tauchrohres für den Leichtflüssigkeitsablauf bzw. die auf gleichem Niveau liegende Oberkante der Deckwand der den Leichtflüssigkeitsausgleichsraum bildenden Kammer festgelegt wird. Der Abstand zwischen der Sohle der kleinen Durchtrittsöffnung und dieser Oberkante ist dabei so bemessen, daß durch den hierdurch vorgegebenen Unterschied im Schwerflüssigkeitsniveau zwischen Abscheidekammer und Leichtflüssigkeitsausgleichsraum die gesamte Leichtflüssigkeitsmenge aus der Abscheidekammer herausgedrückt wird.

Es versteht sich, daß der erfindungsgemäß ausgebildete Abscheider auch mehrere Abscheidekammern aufweisen kann. Diese Kammern können der mit dem Tauchrohr in Verbindung stehenden Abscheidekammer in Strömungsrichtung vor- oder nachgeordnet sein. Vorzugsweise sind sie dieser Abscheidekammer vorgeordnet und so ausgebildet, daß die entsprechenden Trennwände zwischen den Abscheidekammern unter der Oberkante des Tauchrohres enden, so daß die aufsteigende Leichtflüssigkeit gleichzeitig aus diesen weiteren Abscheidekammern über das Tauchrohr mit abgeführt wird. Die zusätzlichen Kammern sind daher voll in den Abscheidevorgang integriert. Die Erfindung schlägt insbesondere vor, daß der Abscheider einen integrierten Schlammfang aufweist, d. h. der Schlammfang wird gleichzeitig als Abscheidekammer benutzt, wobei das im Schlammfang aufsteigende Öl mit über das Tauchrohr abgeführt wird. Der Schlammfang kann dabei durch eine Trenn- bzw. Überlaufwand in einen Grobschlammfang und einen Feinschlammfang unterteilt sein. Bei dieser Ausführungsform endet die Überlaufwand zwischen dem Feinschlammfang und der eigentlichen Abscheidekammer vorzugsweise auf der Sohle der kleinen Durchtrittsöffnung.

Dem Zulauf ist zweckmäßigerweise eine Überlaufwand nachgeordnet, deren Überlaufkante unterhalb der Oberkante des Tauchrohres und der Zulaufsohle angeordnet ist. Hierdurch wird auch der in Gemisch-Strömungsrichtung hinter der Überlaufwand befindliche Raum, der beispielsweise als Grobschlammfang genutzt werden kann, in den Abscheidevorgang integriert, da die aufsteigende Leichtflüssigkeit ungehindert der Eintrittsöffnung des Tauchrohres zuströmen kann.

Bei den vorstehend beschriebenen Ausführungsformen findet somit der Leichtflüssigkeitsablauf ausschließlich unter dem Schwerflüssigkeits-spiegel statt, wobei keine Leichtflüssigkeitsrückhaltewanne verwendet wird. Durch die Schwerflüssigkeitsspiegelabsenkungen im Leichtflüssigkeitsausgleichsraum werden den Leichtflüssigkeitsablauf fördernde Pumpwirkungen erzeugt. Da die Oberkante des Tauchrohres tiefer als die Überlaufkante vor dem Schwerflüssigkeitsablauf liegt, entsteht ein unverdrängbarer Raum unterhalb der Tauchrohroberkante in der Abscheidekammer. Im Tauchrohr selbst senkt sich der Schwerflüssigkeitsspiegel durch die Verbindung zwischen dem Leichtflüssigkeitsausgleichsraum und dem Schwerflüssigkeitsablauf auf die erforderliche Tiefe ab, wobei für die Tiefe maßgebend die Höhe der jeweils anfallenden Dichte der Leichtflüssigkeit und das aufzunehmende Volumen ist. Wird für die Absenkung die niedrigst vorkommende Dichte zugrundegelegt, dann funktioniert der Leichtflüssigkeitsablauf auch bei allen höheren Dichten. Bei jedem Ruhezustand sinkt der Schwerflüssigkeitsspiegel auf die vorgeschriebene Tiefe im Ausgleichsbehälter ab. Da das untere Ende des Tauchrohres im Ausgleichsbehälter endet, läuft die aufschwimmende Leichtflüssigkeit über das untere Ende des Tauchrohres in den Ausgleichsbehälter. Der Abscheider kann somit bei jeder Inbetriebnahme als leichtflüssigkeitsfrei bezeichnet werden.

Der vorstehend beschriebene Abscheider kann eine oder mehrere Abscheidekammer aufweisen, wobei jedoch, falls mehrere Abscheidekammern vorgesehen sind, diese immer einen gemeinsamen Flüssigkeitsspiegel aufweisen, der im Ruhezustand des Abscheiders durch die Oberkante des in den Leichtflüssigkeitsausgleichsraum mündenden einzigen Tauchrohres festgelegt ist. Bei einem entsprechenden Zulauf kann sich somit das Flüssigkeitsgemisch über sämtliche Abscheidekammern verteilen, und durch den entsprechenden Ablauf wird auch der sich über sämtliche Abscheidekammern erstreckende Flüssigkeitsspiegel abgesenkt.

Eine weitere Ausführungsform der Erfindung, die in bezug auf die Entfernung der Leichtflüssigkeit aus der Abscheidekammer besonders wirksam ist und eines besonders geringen Wartungsaufwandes bedarf, zeichnet sich nunmehr dadurch aus, daß die Abscheidekammer derart in einem Vorabscheideraum, in den der Zulauf mündet, angeordnet ist, daß die sich in beiden Bereichen ausbildenden Leichtflüssigkeitsschichten voneinander getrennt sind, und daß sowohl von der Abscheidekammer als auch vom Vorabscheideraum ein Tauchrohr in den Leichtflüssigkeitsausgleichsraum führt. Bei dieser Lösung ist somit ein von der Abscheidekammer getrennter Vorabscheideraum (abgesehen von dem vom Vorabscheideraum in die Abscheidekammer mündenden Zulauf) vorgesehen, wobei beide Bereiche voneinander getrennte Leichtflüssigkeitsabführungen besitzen, die dann in einen gemeinsamen Leichtflüssigkeitsausgleichsraum oder mehrere miteinander verbundene Leichtflüssigkeitsausgleichsräume führen. Vom Leichtflüssigkeitsausgleichsraum erfolgt die Weiterleitung der Leichtflüssigkeit in der in der vorstehend genannten Patentanmeldung beschriebenen Weise über ein Leichtflüssigkeitsablaufrohr in einen Leichtflüssigkeitsspeicher. Der Vorteil dieser Lösung ist darin zu sehen, daß im Vorabscheideraum bereits eine Trennung zwischen Leichtflüssigkeit und Schwerflüssigkeit stattfinden kann, so daß die eigentliche Abscheidekammer entsprechend entlastet wird. Dabei erfolgt eine direkte Abführung vom Vorabscheideraum in den Leichtflüssigkeitsausgleichsraum, so daß der überwiegende Teil der abzuführenden Leichtflüssigkeit gar nicht mehr die eigentliche Abscheidekammer passieren muß. Hierdurch wird sowohl die Wirkung des Abscheiders verbessert als auch sein Wartungsaufwand erniedrigt, da die eigentliche Abscheidekammer in geringerem Ausmaß mit Leichtflüssigkeit belastet ist als bei der bereits vorgeschlagenen Lösung. Hierdurch müssen die Abscheidekammern sowie die darin befindlichen Teile in größeren Abständen gereinigt werden.

Im einzelnen funktioniert der Abscheider dabei so: Im Ruhezustand des Abscheiders nimmt der Flüssigkeitsspiegel im Vorabscheideraum und in der Abscheidekammer ein Niveau ein, das mit der Oberkante des jeweiligen Tauchrohres zusammen fällt. Weiter abfallen kann der Flüssigkeitsspiegel nicht, da sowohl die Kammer als auch der Vorabscheideraum keine tiefer gelegene Austrittsöffnung aufweist (abgesehen von einer geschlossenen Ablaßöffnung). In diesem Ruhezustand ist der Flüssigkeitsspiegel im Vorabscheideraum leichtflüssigkeitsfrei. Im Ruhezustand besitzt ferner der Flüssigkeitsspiegel innerhalb des Leichtsflüssigkeitsausgleichsraumes ein mit der Sohle der kleinen Durchtrittsöffnung zusammenfallendes Niveau. Bei zuströmendem Gemisch wird die noch im dem Vorabscheideraum zugeordneten Tauchrohr befindliche Leichtflüssigkeit durch die entsprechende Schwerflüssigkeit in den Leichtflüssigkeitsausgleichsbehäleter gedrückt. Die mit dem Gemisch zuströmende Leichtflüssigkeit sammelt sich im Vorabscheideraum auf der Schwerflüssigkeit an. Ein Teil des Gemisches dringt in die eigentliche Abscheidekammer ein. Da der entsprechende Zulauf für die Abscheidekammer sehr tief im Vorabscheideraum angeordnet ist, wird hierdurch die sich im Vorabscheideraum aufbauende Leichtflüssigkeitsschicht nicht beeinflußt, und es wird nur eine geringe Menge an Leichtflüssigkeit mit in die eigentliche Abscheidekammer eingeführt. Auch hier sammelt sich die verbleibende Leichtflüssigkeit auf der Schwerflüssigkeit. Durch die Schwerflüssigkeit wird die noch im der Abscheidekammer zugeordneten Tauchrohr befindliche Leichtflüssigkeit in den Leichtflüssigkeitsausgleichsbehälter gedrückt. Jedenfalls strömt die gesamte Schwerflüssigkeit nach und nach in die eigentliche Abscheidekammer, da im Vorabscheideraum kein gesonderter Schwerflüssigkeitsablauf angeordnet ist und die Schwerflüssigkeit in jedem Fall die Abscheidekammer passieren muß, um den dieser nachgeordneten Schwerflüssigkeitsablauf zu erreichen. Ein direkter Austritt der Leichtflüssigkeit aus der Abscheidekammer über die Überlaufkante der Überlaufwand in den Schwerflüssigkeitsablauf wird durch eine der Überlaufwand vorgeordnete Tauchwand verhindert, so daß nur Schwerflüssigkeit die Tauchwand unterströmen kann.

Nach Beendigung des Gemischzulaufes sinkt der Schwerflüssigkeitsspiegel mit der darüber befindlichen Leichtflüssigkeitsschicht im Vorabscheideraum und in der Abscheidekammer ab, da über die kleine Durchtrittsöffnung eine Verbindung zwischen dem Leichtflüssigkeitsausgleichsraum und dem Schwerflüssigkeitsablauf besteht. Sobald die Leichtflüssigkeitsschicht an die Oberkante der Tauchrohre stößt, wird die in den Tauchrohren befindliche Schwerflüssigkeit aus diesen in den Leichtflüssigkeitsausgleichsbehälter gedrückt Danach gelangt die Leichtflüssigkeitsschicht über die Tauchrohre in den Leichtflüssigkeitsausgleichsbehälter. Dies geschieht solange, bis sich die Schwerflüssigkeitsspiegel im Vorabscheideraum, in der Abscheidekammer und im Leichtflüssigkeitsausgleichsraum einander angeglichen haben und die Schwerflüssigkeitsspiegel im Vorabscheideraum sowie der Abscheidekammer mit den Oberkanten der Tauchrohre übereinstimmen. In diesem Zustand ist die gesamte, im Vorabscheideraum und in der Abscheidekammer befindliche Leichtflüssigkeitssäule aus diesen über die Tauchrohre herausgedrückt worden. Der Schwerflüssigkeitsspiegel im Leichtflüssigkeitsausgleichsraum sinkt dann aufgrund der Verbindung über die kleine Durchtrittsöffnung weiter ab, bis das Niveau der Sohle der Durchtrittsöffnung erreicht ist. Dieser Schwerflüssigkeitsspiegel im Leichtflüssigkeitsausgleichsraum entspricht dem Ruhezustand des Abscheiders.

Die Oberkanten der beiden Tauchrohre sind im allgemeinen niedriger angeordnet als die Kante der dem Schwerflüssigkeitsablauf zugeordneten Überlaufwand. Beide können sich jedoch auf gleichem Niveau befinden. Man erkennt, daß bei der vorstehend geschilderten Funktionsweise der überwiegende Teil der Leichtflüssigkeit bereits aus dem Vorabscheideraum über das entsprechende Tauchrohr in den Leichtflüssigkeitsausgleichsraum und somit in den Speicher abgeführt wird, während in die eigentliche Abscheidekammer überwiegend Schwerfiüssigkeit fließt, die nur noch einen geringen Leichtflüssigkeitsanteil (unter 1 %) mitführt. Auf diese Weise wird eine Belastung der Abscheidekammer mit einem hohen Leichtflüssigkeitsanteil verhindert.

Vorteilhafterweise ist die Abscheidekammer in einem den Leichtflüssigkeitsablauf und den Schwerflüssigkeitsablauf mit Überlaufwand enthaltenden Behälter angeordnet, der im Vorabscheideraum vorgesehen ist. Bei dieser Ausführungsform sind daher sämtliche Bestandteile der eigentlichen Abscheidekammer und des Leichtflüssigkeitsablaufes einschließlich Leichtflüssigkeitsausgleichsraum, Tauchrohre, Leichtflüssigkeitsablaufrohr und ggf. Leichtflüssigkeitsspeicher sowie Schwerflüssigkeitsablauf mit Überlaufwand und die kleine Durchtrittsöffnung in einen Behälter integriert, der im Vorabscheideraum angeordnet ist. Der Vorabscheideraum ist dementsprechend größer ausgebildet als dieser Behälter, so daß genügend Raum zur Verfügung steht, um den vorstehend beschriebenen Abscheidevorgang sowie die Entsorgung der Leichtflüssigkeitsschicht über das entsprechende Tauchrohr durchführen zu können. Der Behälter ist zweckmäßigerweise derart im Vorabscheideraum angeordnet, daß sich sein Boden im Abstand vom Boden des Vorabscheideraumes befindet, und der Zulauf der Abscheidekammer des Behälters erfolgt von unten aus dem Vorabscheideraum. Hierdurch wird sichergestellt, daß möglichst wenig Leichtflüssigkeit mit in die Abscheidekammer geführt wird, da sich im unteren Teil des Vorabscheideraumes Schwerflüssigkeit ansammelt. Ferner wird der Weg des Zulaufs in der Abscheidekammer gegenüber den Ausführungsformen des Standes der Technik, bei denen der Zulauf oben und eine Umlenkung nach unten und dann wieder nach oben erfolgte, wesentlich verkürzt.

Der Gemischzulauf von außen erfolgt vorzugsweise über ein in den Vorabscheideraum im oberen Teil desselben mündendes Rohr. Der Zulauf zur Abscheidekammer befindet sich vorzugsweise im entgegengesetzten Bereich des Vorabscheideraumes, so daß das Gemisch bis zum Einströmen in die Abscheidekammer einen relativ großen Weg zurücklegen muß, der eine entsprechende Vorabscheidung begünstigt. Zweckmäßigerweise ist der Zulauf in den Vorabscheideraum als erst horizontal und dann nach unten gerichtetes Winkelrohr ausgebildet. Hierdurch wird sichergestellt, daß das zuströmende Gemisch die sich oben ansammelnde Leichtflüssigkeitsschicht nicht beeinflußt.

Der Zulauf in die Abscheidekammer ist vorzugsweise konstruktiv so gestaltet, daß die Abscheidekammer eine sich über deren Breite im Boden derselben erstreckende Öffnung sowie einen nachfolgenden Schacht mit Überlaufwand aufweist. Dadurch wird die Abscheidekammer über die gesamte Breite angeströmt, so daß ein gleichmäßiger Durchgang sichergestellt wird. Durch das Aufströmen im Schacht und das nachfolgende Abwärtsströmen in die Abscheidekammer trennen sich die letzten Leichtflüssigkeitspartikel von der Schwerflüssigkeit, so daß eine einwandfreie Abscheidewirkung erreicht wird. Diese Wirkung kann durch eine am Boden der Abscheidekammer angeordnete schiefe Ebene oder durch Füllkörper in der Abscheidekammer weiter verbessert werden. Dadurch, daß der Zulauf vom unteren Bereich des Vorabscheideraumes ausgeht, gelangt die sich im Vorabscheideraum ausbildende Leichtflüssigkeitsschicht nicht mit in die Abscheidekammer.

Um die entsprechende Abtrennung der Abscheidekammer vom Vorabscheideraum zu erreichen, sind die Einfassungswände der Abscheidekammer so hoch angeordnet, daß sie vom in den Vorabscheideraum zuströmenden Gemisch nicht überströmt werden können. Vorzugsweise ist die eigentliche Abscheidekammer bzw. der diese aufnehmende Behälter mit einer Deckwand versehen.

Zur konstruktiven Ausgestaltung empfiehlt es sich, den die Abscheidekammer sowie die übrigen Teile aufnehmenden Behälter als Stahlkonstruktion auszuführen, die in einem einen Verabscheideraum bildenden Betonbehälter angeordnet ist. Die Lagerung des Stahlbehälters im Betonbehälter erfolgt über geeignete Träger, die sicherstellen, daß der Behälter von Schwerflüssigkeit unterströmt werden und der Zulauf in die eigentliche Abscheidekammer von unten erfolgen kann. Der Vorabscheideraum ist vorzugsweise als Schlammfang ausgebildet und weist die hierfür erforderlichen Einrichtungen auf. Durch diese Anordnung kann ein ggf. getrennt vor einem Abscheider anzuordnender Schlanimfang entfallen.

In Weiterbildung der Erfindung ist der Leichtflüssigkeitsausgleichsraum in mehrere Teilkammern unterteilt, die im die Abscheidekammer aufnehmenden Behälter angeordnet sind und insbesondere stromab des Abscheidekammerzulaufs bei Überströmung durch das Gemisch sowie unterhalb der Schwerflüssigkeitsablaufsohle stromab der dem Schwerflüssigkeitsablauf angeordneten Überlaufwand angeordnet sind. Hierdurch ist es möglich, den Leichtflüssigkeitsausgleichsraum möglichst groß zu gestalten, um ein sehr rasches Abdrücken der Leichtflüssigkeit in den entsprechenden Speicher zu erreichen. Dies wird ermöglicht, ohne daß hierzu der Behälter vergrößert werden muß. Der unterhalb der Schwerflüssigkeitsablaufsohle befindliche Bereich könnte sonst nicht genutzt werden. Der stromab des Abscheidekammerzulaufs angeordnete Bereich, von dem eine Begrenzungswand durch die Schachtwand des Zulaufs gebildet wird, wird vom zuströmenden Gemisch überströmt, so daß hierdurch die ohnehin gewünschte Strömungscharakteristik des zuströmenden Gemisches erreicht wird. Es versteht sich, daß ein Teil des Leichtflüssigkeitsausgleichsraumes benachbart zur Schwerflüssigkeitsablaufsohle angeordnet sein sollte, um den entsprechenden Effekt über die kleine Durchtrittsöffnung zu erzielen, da sonst entsprechende Rohrverbindungen vorgesehen sein müßten. Dieser Bereich steht mit den anderen Teilkammern des Leichtflüssigkeitsausgleichsraumes über entsprechende Kanäle, Durchlässe u. dgl. in Verbindung. Das vom Leichtflüssigkeitsausgleichsraum nach oben geführte Leichtflüssigkeitsablaufrohr mündet zweckmäßigerweise in einen oben angeordneten Aufnahmekasten, von dem eine Zuführung zum Leichtflüssigkeitsspeicher abgeht. Der Leichtflüssigkeitsspeicher ist vorteilhafterweise seitlich von der eigentlichen Abscheidekammer angeordnet.

Um die vorstehend erwähnte Direktverbindung über ein Tauchrohr vom Vorabscheideraum in den Leichtflüssigkeitsausgleichsraum zur erzielen, steht bei einer speziellen Ausführungsform zumindest ein Teil des Leichtflüssigkeitsausgleichsraumes seitlich vom Behälter vor und weist eine geschlossene Oberwand auf, von der sich das dem Vorabscheideraum zugeordnete Tauchrohr aus nach unten erstreckt. Dieser Teil des Behälters ist somit vollständig in das Leichtflüssigkeits-Schwerflüssigkeits-Gemisch im Vorabscheider eingetaucht. Bei einer bevorzugten Ausführungsform ist das der Abscheidekammer zugeordnete Tauchrohr in einer Ausbuchtung der Abscheidekammer angeordnet, die sich über der Oberwand des Leichtflüssigkeitsausgleichsraumes befindet. Bei dieser Ausführungsform überdeckt somit die Abscheidekammer im Bereich der Ausbuchtung den darunter befindlichen Leichtflüssigkeitsausgleichsraum. Hierdurch ist eine sichere Abführung von Flüssigkeit in den Leichtflüssigkeitsablaufraum gewährleistet.

Die zuletzt beschriebenen Ausführungsformen unterscheiden sich von den eingangs beschriebenen Ausführungsformen durch den von unten erfolgenden Zulauf sowie die gleichzeitige Trennung des Leichtflüssigkeitsablaufs und der Abscheideroberfläche (Vorabscheideraum und eigentliche Abscheidekammer). Der Vorabscheideraum (Schlammfang) ist unten und die eigentliche Abscheidekammer darüber angeordnet. Bei Nutzung des Vorabscheideraumes als Schlammfang wird besonders wenig Schlamm in die Kanalisation eingeleitet und bis zu 99 % anfallende Leichtflüssigkeit schon vor der eigentlichen Abscheidekammer in den Leichtflüssigkeitsspeicher befördert. Diese Entlastung der eigentlichen Abscheidekammer stellt einen besonders großen Vorteil dar.

Durch den speziellen Zulauf werden Zulaufturbulenzen schon vor dem Vorabscheideraum beruhigt,und der Zulauf wird über die gesamte Breite verteilt. Der Schlamm verbleibt im Vorabscheideraum und kann entnommen werden, ohne die ganze Anlage entsorgen zu müssen. Die Leichtflüssigkeit gelangt schon hier an den angestauten Schwerflüssigkeitsspiegel und in den Leichtflüssigkeitsspeicher, ohne daß der eigentliche Abscheider belastet wird. Ferner wird der Rückfluß der während des Betriebes angesammelten Leichtflüssigkeitsschicht in den Zulauf zuverlässig verhindert (unverdrängbarer Raum).

Wenn der Vorabscheideraum als Schlammfang genutzt wird, so liegt dieser nunmehr abseits der unverzichtbaren Durchgangszone und somit im total beruhigten Bereich. Das Absinken des Feinschlammes und das Aufsteigen von noch vorhandener Leichtflüssigkeit werden optimal gefördert. Durch die Trennung der Schlammfang- und Abscheideoberfläche ist für den Leichtflüssigkeitsablauf beim Ruhezustand für jede Oberfläche je ein Tauchrohr erforderlich, die die Leichtflüssigkeit in den gemeinsamen Leichtflüssigkeitsausgleichsbehälter ableiten, wie vorstehend beschrieben. In diesem Ausgleichsbehälter kann die Leichtflüssigkeit schon als entsorgt angesehen werden, weil sie bei der nächsten Inbetriebnahme, also bei steigendem Schwerflüssigkeitsspiegel, in den Leichtflüssigkeitsspeicher abgedrückt wird und keine Verbindung mehr mit durchfließender Schwerflüssigkeit hat. Hingegen schwimmt bei herkömmlichen Abscheidern die gespeicherte Leichtflüssigkeit immer noch auf der durchfließenden Schwerflüssigkeit.

Bei einer speziellen Ausführungsform ist der Zulauf in den Vorabscheideraum (Schlammfangzulauf) als Mehrzweckvorraum ausgebildet und beginnt etwa über dem Schwerflüssigkeitsspiegel im Ruhezustand und reicht bis zum Boden der Gesamtanlage. Der durch einen Rohrbogen bzw. Zulaufverschluß nach unten gerichtete Gemischstrom wendet auf halben Wege und strömt beiderseits des Zulaufbogens zu einer Überlaufkante des Mehrzweckvorraumes. Hierbei setzen sich schwerere Teilchen im Vorraum ab, während leichtere Teilchen in ihrer Auftriebskraft unterstützt werden. Bei Erreichen der Überlaufkante entsteht ein Geschwindigkeitsstop, bei der Leichtflüssigkeit etc. entsteht eine Schleuderwirkung. Nur solche Bestandteile, die von der Leichtflüssigkeitsschicht nicht mehr gebunden werden, setzen sich im extrem beruhigten Schlammfang ab. Die nach unten geöffnete Zulauföffnung zur eigentlichen Abscheidekammer ist auf der Grenzlinie Abscheider/Schlammfang angeordnet. In diese Öffnung können nur noch Bestandteile von Leichtflüssigkeit oder von Leichtstoffen geführt werden. Erfahrungsgemäß handelt es sich hierbei nur noch um 1 - 2 %.

Bei einer weiteren Ausführungsform der Erfindung ist ein zusätzliches Absenktauchrohr vorgesehen, das als Sicherheitseinrichtung für übermäßig große zufließende Leichtflüssigkeitsmengen (Ölunfall) dient. Bei den vorstehend beschriebenen Ausführungsformen sind die Tauchrohrlänge der Schwerflüssigkeitsspiegelabsenkung und die dementsprechende Tauchtiefe des Tauchrohres in Verbindung mit der Grundfläche des Leichtflüssigkeitsausgleichsbehälters maßgebend für das Aufnahmevolumen im Ausgleichsbehälter bei jedem Ruhezustand. Die Größe dieses Ausgleichsbehälters kann so gewählt werden, daß sie für jeden erdenklichen Fall ausreicht. Um dennoch unvorhersehbare Zuflüsse an Leichtflüssigkeiten zu verhindern, ist ein zusätzliches Absenktauchrohr zur Schwerflüssigkeitsspiegelabsenkung vorgesehen, das so tief nach unten verlängert ist, daß zufließende Leichtflüssigkeit die Tauchrohrtiefe nie erreichen kann. Das wird dadurch erreicht, daß die Leichtflüssigkeitssäule über dem Schwerflüssigkeitsspiegel so niedrig gehalten wird, daß die Leichtflüssigkeit die Schwerflüssigkeit nicht bis zu dieser Tiefe verdrängen kann. Die Verlängerung der Absenktauchrohres erfolgt in den Vorabscheideraum (Schlammfang) hinein, und zwar vorzugsweise in einem größer dimensionierten Rohr, welches vom Leichtflüssigkeitsausgleichsbehälter ausgeht, und reicht bis unmittelbar über den Schlammfangboden.

Die Erfindung wird nachfolgend anhand von Ausführungsbeispielen in Verbindung mit der Zeichnung im einzelnen erläutert. Es zeigen:
- Figur 1: eine Seitenansicht eines Leichtflüssigkeitsabscheiders;
- Figur 2: einen Teilschnitt durch den Abscheider der Figur 1 entlang Linie 2 - 2 in Figur 3;
- Figur 3: eine Draufsicht auf den Leichtflüssigkeitsabscheider der Figuren 1 und 2;
- Figur 4: einen Schnitt durch den Abscheider entlang Linie 4 - 4 in Figur 3;
- Figur 5: einen schematischen Längsschnitt durch eine weitere Ausführungsform eines Leichtflüssigkeitsabscheiders, wobei der Vorabscheideraum nicht dargestellt ist;
- Figur 6: eine Draufsicht auf den Abscheider der Figur 5;
- Figur 7: eine Draufsicht auf eine dritte Ausführungsform eines Leichtflüssigkeitsabscheiders;
- Figur 8: einen Längsschnitt durch den Abscheider der Figur 7;
- Figur 9: einen Querschnitt durch den Abscheider der Figur 7;
- Figur 10: eine Draufsicht auf eine vierte Ausführungsform eines Leichtflüssigkeitsabscheiders, bei der der Vorabscheideraum zylindrisch ausgebildet ist;
- Figur 11: einen Schnitt durch den Abscheider der Figur 10; und
- Figur 12: einen Schnitt durch einen mit einem Absenktauchrohr versehenen Abscheider.

Der in den Figuren dargestellte Abscheider dient zur Abscheidung einer Leichtflüssigkeit von einer Schwerflüssigkeit, insbesondere Öl oder Benzin von Wasser. Es handelt sich um einen Schwerkraftabscheider, wobei der Abscheider zur Unterstützung des Abscheidevorganges entsprechende Füllkörper enthalten kann

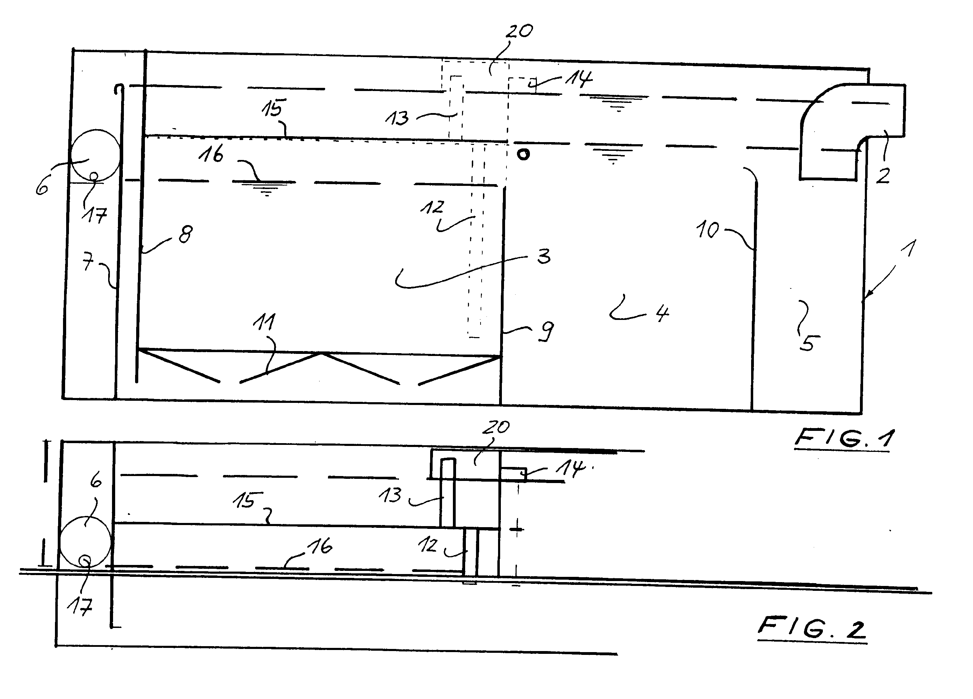

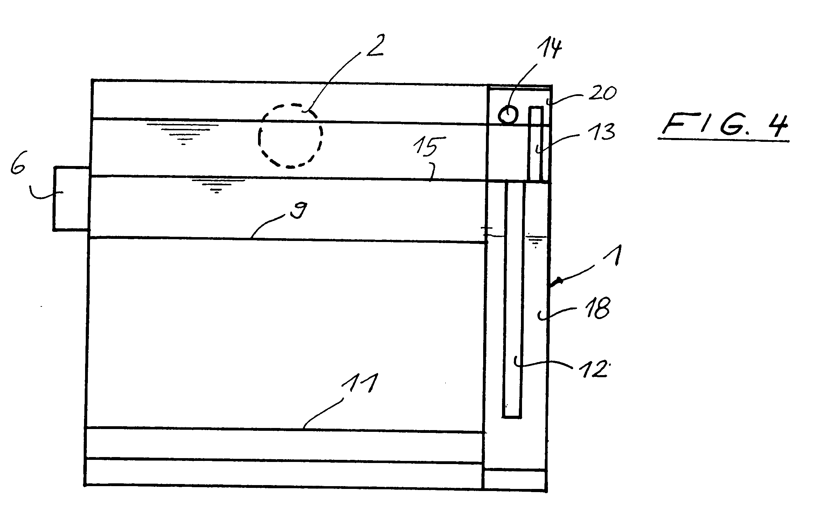

Bei dem in den Figuren 1 - 4 dargestellten Ausführungsbeispiel ist der Abscheider kastenförmig ausgebildet und besitzt die Grundfläche eines Rechtecks. Dies schließt jedoch nicht aus, daß auch andere Ausführungsformen, beispielsweise runde Ausführungsformen, zur Anwendung gelangen können.

Wie die Figuren zeigen, besitzt der Leichtflüssigkeitsabscheider 1 einen Zulauf 2 für ein Leichtflüssigkeits-Schwerflüssigkeits-Gemisch, der in der Form eines abwärts gekrümmten Rohres ausgebildet ist. Der Zulauf 2 mündet in eine erste Abscheidekammer, bei der es sich um einen Grobschlammfang 5 handelt. Bei dieser Ausführungsform ist der Schlammfang in den Abscheider integriert, so daß kein gesonderter Schlammfang vorgesehen sein muß. Eine sich quer durch den Abscheider erstreckende Überlaufwand 10 trennt den Grobschlammfang 5 von einer zweiten Abscheidekammer, die als Feinschlammfang 4 ausgebildet ist. Dem Feinschlammfang 4 nachgeordnet ist eine dritte Abscheidekammer, die in der nachfolgenden Beschreibung nur als Abscheidekammer 3 bezeichnet wird. Diese Abscheidekammer ist vom Feinschlammfang 4 durch eine quer durch den Abscheider verlaufende Überlaufwand 9 getrennt. Die Überlaufwand 9 ist niedriger als die Überlaufwand 10.

Die Abscheidekammer 3 besitzt an ihrem Boden zwei zweiseitig geneigte schiefe Ebenen 11, die als Einlegeböden ausgebildet sein können. In der Mitte der jeweiligen schiefen Ebenen befinden sich quer über die Abscheiderbreite verlaufende Austrittsöffnungen für die Schwerflüssigkeit. Von dort gelangt die Schwerflüssigkeit durch eine Durchflußöffnung am unteren Ende einer Tauchwand 8, die die Abscheidekammer nach hinten begrenzt, und über die Überlaufkante einer Überlaufwand 7 in einen Schwerflüssigkeitsablauf 6, der seitlich am Abscheider angeordnet ist.

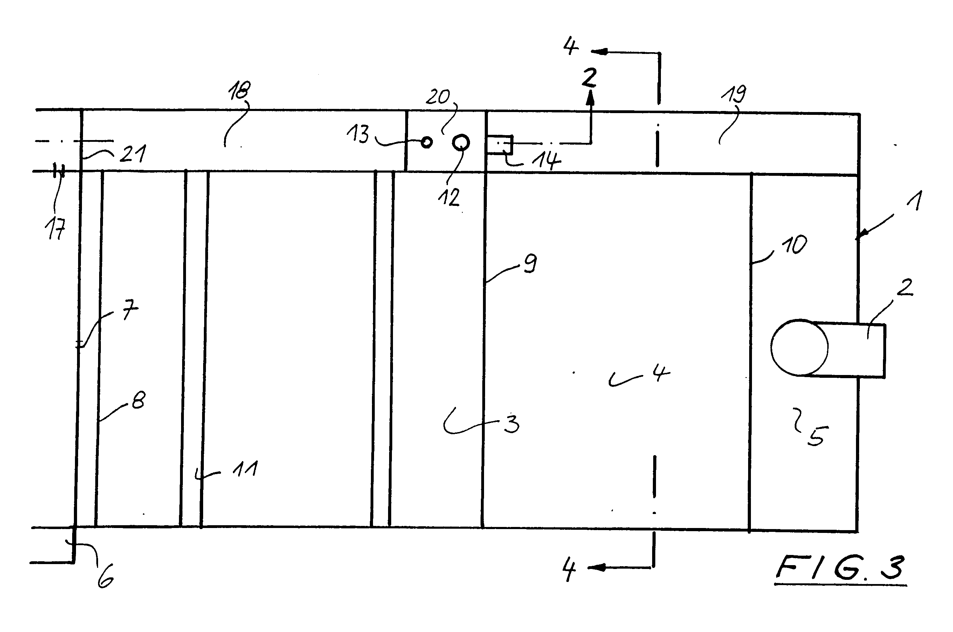

Bei dem hier dargestellten und beschriebenen Ausführungsbeispiel findet in sämtlichen drei Abscheidekammern, d. h. auch im Grobschlammfang 5 und im Feinschlammfang 4, ein Abscheidevorgang statt. Bei diesem Abscheidevorgang trennt sich die Leichtflüssigkeit aufgrund ihres niedrigeren spezifischen Gewichtes von der Schwerflüssigkeit und steigt nach oben. Aufgrund eines nachfolgend noch beschriebenen Effektes strömt die Leichtflüssigkeit dabei der Eintrittsöffnung eines Tauchrohres 12 zu, das von der Abscheidekammer 3 in einen Leichtflüssigkeitsausgleichsraum 18 (in Figur 3 gezeigt) mündet. Die Leichtflüssigkeit verläßt das Tauchrohr am unteren Ende und steigt dann im Leichtflüssigkeitsausgleichsraum 18 nach oben und wird durch ein Leichtflüssigkeitsablaufrohr 13 in eine kleine Kammer 20 und von dort über ein weiteres Rohr 14 in einen Leichtflüssigkeitsspeicher 19 (in Figur 3 gezeigt) geführt. Die Leichtflüssigkeit wird dort gelagert und kann in bestimmten zeitlichen Abständen entnommen werden.

Der vorstehend erwähnte Effekt der Abführung der Leichtflüssigkeit durch das Tauchrohr nach unten beruht auf folgendem:

Im Ruhezustand des Abscheiders, wenn kein Gemisch zuläuft, befindet sich der Schwerflüssigkeitsspiegel in der Abscheidekammer 3 bzw. dem Feinschlammfang 4 und dem Grobschlammfang 5 auf dem Niveau der Oberkante des Tauchrohres bzw. der Oberkante der Deckwand einer den Leichtflüssigkeitsausgleichsraum 18 bildenden Kammer, wie bei 15 gezeigt. Das Niveau stellt sich dort ein, da unterhalb davon die Abscheidekammer keine Abflußöffnung aufweist (abgesehen von einer geschlossenen Entleerungsöffnung). Der entsprechende Raum der Abscheidekammer ist daher unverdrängbar.

Im Ruhezustand stellt sich jedoch der Schwerflüssigkeitsspiegel innerhalb des Leichtflüssigkeitsausgleichsraumes 18 tiefer ein als der Schwerflüssigkeitsspiegel in der Abscheidekammer, da der Leichtflüssigkeitsausgleichsraum 18 über eine kleine Durchtrittsöffnung 17 mit dem Schwerflüssigkeitsablauf 6 in Verbindung steht. Hier stellt sich daher das bei 16 dargestellte Schwerflüssigkeitsniveau ein, das mit der Sohle der Durchtrittsöffnung 17 übereinstimmt. Im Ruhezustand ist daher eine Differenz zwischen dem Schwerflüssigkeitsspiegel in der Abscheidekammer und dem Schwerflüssigkeitsspiegel im Leichtflüssigkeitsausgleichsraum vorhanden. Diese Schwerflüssigkeitsspiegeldifferenz bewirkt dann bei Inbetriebnahme des Abscheiders, d. h. zuströmendem Gemisch, daß die sich in der Abscheidekammer, dem Feinschlammfang und dem Grobschlammfang aufbauende Leichtflüssigkeitssäule über das Tauchrohr 12 in den Leichtflüssigkeitsausgleichsraum 18 und von dort über das Steigrohr 13, die Kammer 20 und das Rohr 14 in den Leichtflüssigkeitsspeicher 19 gedrückt wird. Dabei ist die Schwerflüssigkeitsspiegeldifferenz, d. h. der Abstand zwischen der Oberkante des Tauchrohres 12 und der Sohle der kleinen Durchtrittsöffnung 17, so bemessen, daß bei Beendigung des Zulaufes sich keine Leichtflüssigkeit mehr in der Abscheidekammer 3, dem Feinschlammfang 4 und dem Grobschlammfang 5 befindet, d. h. die gesamte Leichtflüssigkeit durch das Tauchrohr 12 abgeführt worden ist. Bei Inbetriebnahme des Abscheiders befindet sich daher keine Leichtflüssigkeit mehr in den Abscheidekammern

Bei einem entsprechenden Modell betrug der Abstand Sohle kleine Durchtrittsöffnung - Oberkante Tauchrohr 22 mm, wobei das Tauchrohr eine Gesamtlänge von 10,7 cm besaß. Hierdurch wird sichergestellt, daß Leichtflüssigkeit einer Dichte von 0.78 g/cm³ und darüber abläuft.

Figur 3 zeigt, daß der Leichtflüssigkeitsausgleichsraum 18 sowie der Leichtflüssigkeitsspeicher 19 hintereinander an einer Seitenwand des Abscheiders angeordnet sind, so daß sich eine ebene Innenwand ergibt, die die Abscheidekammer bzw. Abscheidekammern begrenzt. Um zu verhindern, daß Leichtflüssigkeit aus dem Leichtflüssigkeitsausgleichsraum 18 mit über die kleine Durchtrittsöffnung 17 in den Schwerflüssigkeitsablauf 6 gelangt, ist innerhalb des Leichtflüssigkeitsausgleichsraumes 18 vor der kleinen Durchtrittsöffnung 17 eine eine untere Durchflußöffnung bildende Tauchwand 21 vorgesehen.

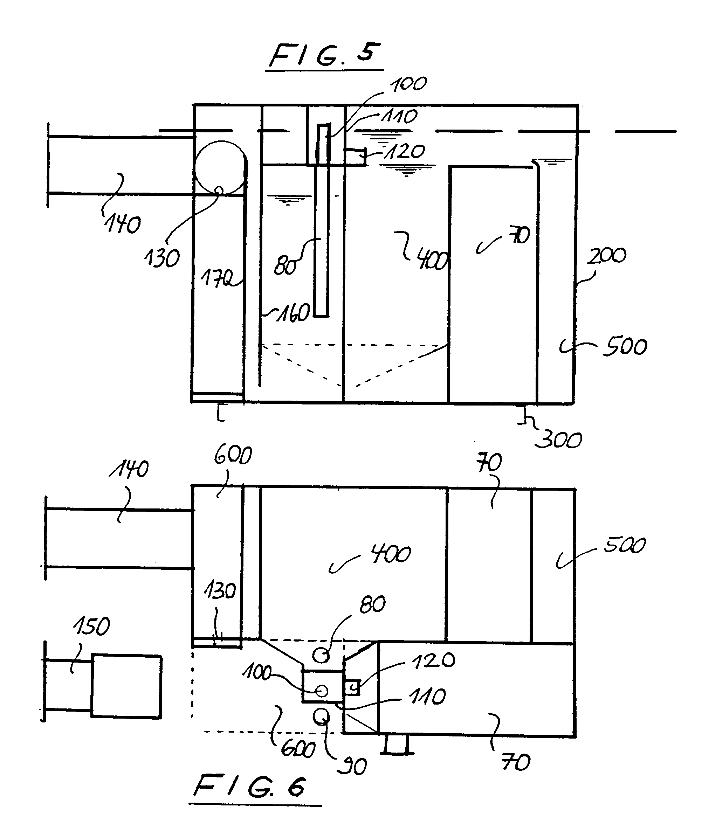

Die Figuren 5 und 6 zeigen eine zweite Ausführungsform eines Leichtflüssigkeitsabscheiders. Dieser Leichtflüssigkeitsabscheider umfaßt einen Behälter 200, in den eine Leichtflüssigkeitsabscheidekammer 400, ein Leichtflüssigkeitsablauf und ein Schwerflüssigkeitsablauf integriert sind. Dieser Behälter ruht auf Montageelementen 300, mittels denen er in einem größeren Betonbehälter (nicht gezeigt) angeordnet ist, der einen Vorabscheideraum beherbergt.

Wie insbesondere aus Figur 6 hervorgeht, erfolgt der Zulauf für das zu trennende Schwerflüssigkeits-Leichtflüssigkeits-Gemisch (vorzugsweise Wasser-Öl-Gemisch) über ein Winkelrohr 150, das das Gemisch nach unten in den Vorabscheideraum leitet. Das Gemisch umströmt und unterströmt dabei den Behälter 200, der im dem Zulauf 150 entgegengesetzten Teil des Vorabscheideraumen angeordnet ist, und zwar derart, daß zwischen dem Boden des Vorabscheideraumes und dem Boden des Behälters 200 ein ausreichender Abstand verbleibt, der eine Anströmung.des Behälters von unten ermöglicht.

Der Behälter ist im wesentlichen kastenförmig ausgebildet und weist eine allgemein rechteckförmige Grundfläche auf. Er besitzt einen Zulaufschacht 500, der unten offen ist und durch eine Überlaufwand begrenzt wird. An der Überlaufwand erstreckt sich ein Raum 70, der einen Teil eines Leichtflüssigkeitsspeichers bildet.

Stromab des Raumes befindet sich eine Abscheidekammer 400, in deren Bodenbereich eine schiefe Ebene (gestrichelt dargestellt) angeordnet ist. In der Mitte der schiefen Ebene befindet sich eine Durchtrittsöffnung für die Schwerflüssigkeit, die dann eine Tauchwand 160 unterströmt und eine Überlaufwand 170 überströmt, bis sie in einen Ablauf und von dort in ein Ablaufrohr 140 gelangt, das sich durch den Vorabscheideraum hindurch erstreckt und die Schwerflüssigkeit beispielsweise an das Kanalnetz abgibt.

Der vorstehend erwähnte Leichtflüssigkeitsausgleichsraum besteht bei diesem Ausführungsbeispiel aus zwei Kammern 600, die hinter der Abscheidekammer 400 unter der Ablaufsohle sowie im wesentlichen seitlich von der Abscheidekammer 400 angeordnet sind. Diese Kammern stehen über geeignete Rohre bzw. Durchlässe (nicht gezeigt) miteinander in Verbindung. Die seitlich angeordnete Kammer des Leichtflüssigkeitsausgleichsraumes ist oben durch eine Deckwand verschlossen, in der ein nach unten führendes Tauchrohr 90 angeordnet ist. Dieses Tauchrohr führt daher vom Vorabscheideraum bis in den Leichtflüssigkeitsausgleichsraum. Die Kammer 600 steht ferner mit einem weiteren Tauchrohr in Verbindung, das aus der Abscheidekammer 400 in den Leichtflüssigkeitsausgleichsraum mündet. Dieses Tauchrohr ist in einer Ausbuchtung der Abscheidekammer angeordnet, die sich über die Kammer 600 erstreckt.

Vom Leichtflüssigkeitsausgleichsraum führt ein Leichtflüssigkeitsablaufrohr 100 nach oben in einen Kasten 110, von dem ein Abführrohr 120 in einen anderen Teil des Leichtflüssigkeitsspeichers 70 mündet. Der Leichtflüssigkeitsausgleichsraum 600 steht über eine kleine Durchtrittsöffnung 130, die an der Sohle des Schwerflüssigkeitsablaufes angeordnet ist, mit diesem Schwerflüssigkeitsablauf in Verbindung.

Der Abscheider funktioniert in der folgenden Weise:

Im Ruhezustand des Abscheiders stellt sich der Flüssigkeitsstand im Vorabscheideraum an der Oberkante des Tauchrohres 90 ein, während sich der Flüssigkeitsstand in der,Abscheidekammer 400 auf der Oberkante des Tauchrohres 80 einstellt. Der Flüssigkeitsstand im Leichtflüssigkeitsausgleichsraum 600 befindet sich auf der Sohle der kleinen Durchtrittsöffnung 130. Wenn Gemisch zuströmt, gelangt es über den Zulauf 150 in den Vorabscheideraum. Dort sammelt sich auf der Schwerflüssigkeit die Leichtflüssigkeit an. Die noch im Tauchrohr 90 befindliche Leichtflüssigkeit wird durch die zufließende Schwerflüssigkeit in den Leichtflüssigkeitsausgleichsraum 600 gedrückt. Ein Teil des Gemisches, überwiegend Schwerflüssigkeit, gelangt auch über den Zulaufschacht 500 in die Abscheidekammer 400, worin sich ebenfalls die Leichtflüssigkeit auf der Schwerflüssigkeit ansammelt und die im Tauchrohr 80 befindliche Leichtflüssigkeit in den Leichtflüssigkeitsausgleichsraum 600 gedrückt wird.

Wenn der Gemischzulauf aufhört, sinkt der Schwerflüssigkeitsspiegel mit der darauf befindlichen Leichtflüssigkeitsschicht sowohl im Vorabscheideraum als auch in der Abscheidekammer ab. Sobald die Leichtflüssigkeitsschicht an die Oberkante der Tauchrohre stößt, wird die in den Tauchrohren befindliche Schwerflüssigkeit aus den Rohren herausgedrückt, und die gesamte Leichtflüssigkeitsschicht läuft über die Tauchrohre in den Leichtflüssigkeitsausgleichsraum ab.

Dies geschieht solange, bis die Schwerflüssigkeitsstände im Vorabscheideraum und die Abscheidekammer das Niveau der Oberkante der beiden Tauchrohre 80, 90 erreicht haben. Ein weiteres Absinken ist nicht möglich, da die entsprechenden Räume keine niedriger gelegene Abflußöffnung aufweisen. Im Leichtflüssigkeitsausgleichsraum sinkt der Spiegel hingegen noch bis auf das Niveau der Sohle der kleinen Durchtrittsöffnung 130 ab, da hier Schwerflüssigkeit über diese Durchtrittsöffnung noch in das Ablaufrohr 140 abgeführt wird. Ein Austreten von Leichtflüssigkeit aus dem Leichtflüssigkeitsausgleichsraum über die kleine Durchtrittsöffnung wird durch eine davor angeordnete Tauchwand verhindert.
Bei dieser Ausführungsform wird der größte Teil der Leichtflüssigkeit bereits im Vorabscheideraum abgeschieden und über das Tauchrohr 90 in den Leichtflüssigkeitsausgleichsraum gedrückt. Nur noch ein geringer Teil passiert zusammen mit der Schwerflüssigkeit die eigentliche Abscheidekammer 400, so daß diese weitgehend von Leichtflüssigkeit unbelastet bleibt und sich somit insgesamt ein verbesserter Abscheidevorgang mit geringerer Wartungsbelastung der Abscheidekammer ergibt.

Bei der hier dargestellten Ausführungsform weist der Leichtflüssigkeitsausgleichsraum zwei Kammern 600 auf. Er kann jedoch auch in eine andere Zahl von Kammern aufgeteilt sein bzw. nur eine einzige Kammer umfassen. Auch die Lage der Kammern kann von dem hier gezeigten Ausführungsbeispiel verschieden sein.

Wesentlich ist, daß die Einfassungswände der Abscheidekammer 400 so hoch angeordnet sind, daß der sich hierin ausbildende Flüssigkeitsspiegel vom Flüssigkeitsspiegel im Vorabscheideraum getrennt ist und die einzige Verbindung zwischen beiden Bereichen über den Zulaufsschacht 500 sowie den entsprechenden Leichtflüssigkeitsausgleichsraum erfolgt.

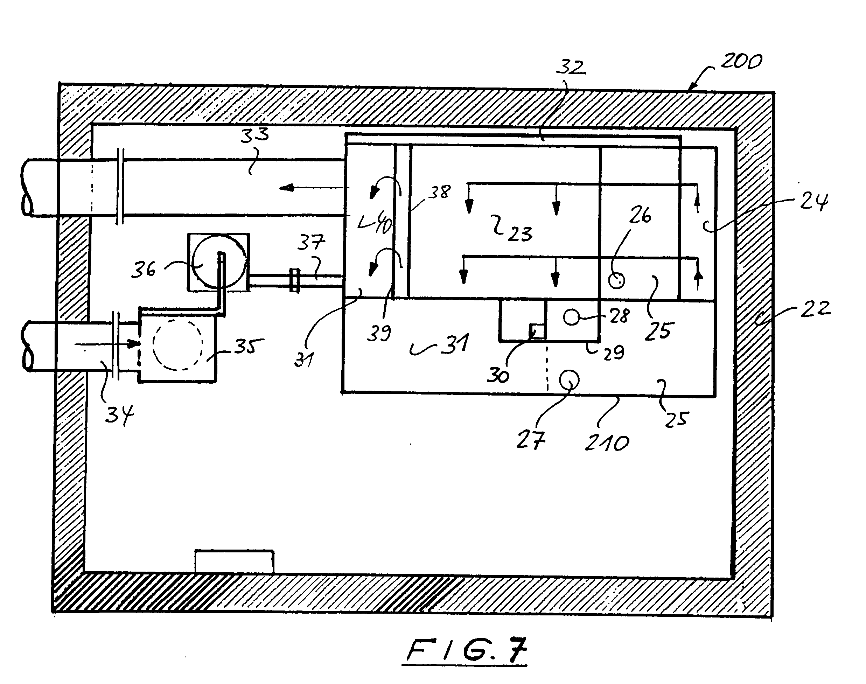

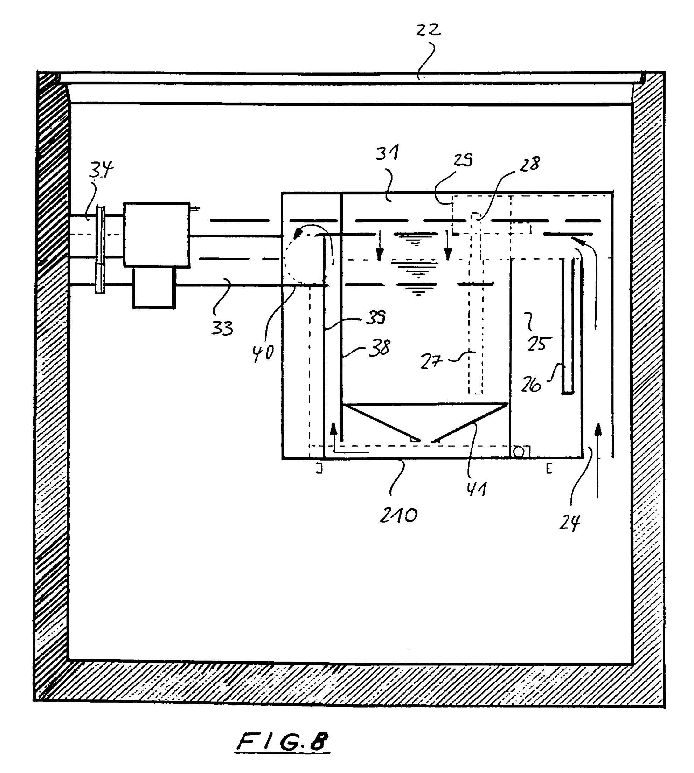

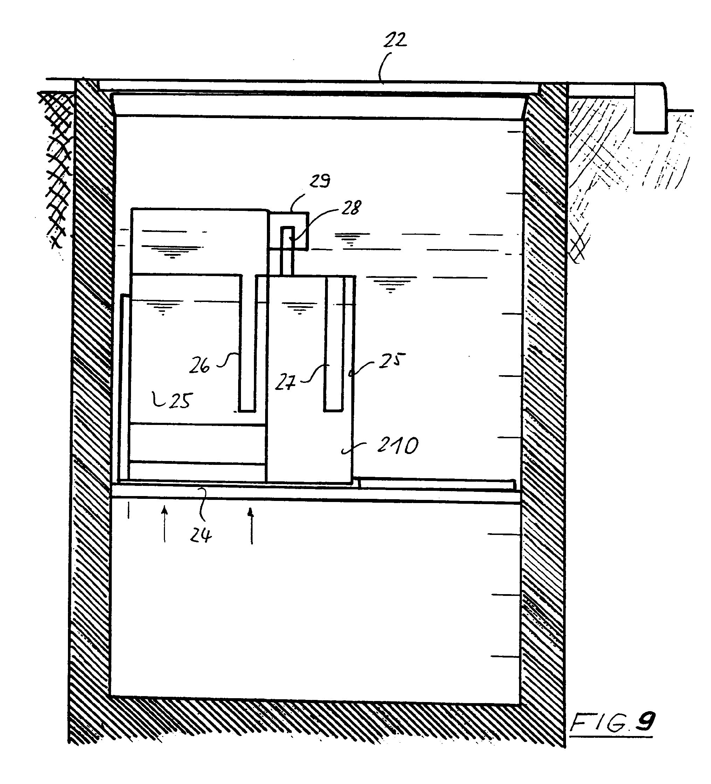

Die Figuren 7 bis 9 zeigen eine dritte Ausführungsform eines Leichtflüssigkeitsabscheider 200, bei dem ein eine Abscheidekammer 23 aufweisender Behälter 210 in einem Betonbehälter 22 angeordnet ist, der einen Vorabscheideraum enthält. Der Behälter 210 ist so im Behälter 22 angeordnet, daß er einen entsprechenden Abstand von dessen Boden aufweist und von unten mit Gemisch abgeströmt werden kann. Das Gemisch gelangt über ein Zulaufrohr 34 und einen Zulaufabschluß 35 nach unten in den Vorabscheideraum. Dort findet in der gleichen Weise wie bei der vorstehend beschriebenen Ausführungsform eine Trennung zwischen Leichtflüssigkeit und Schwerflüssigkeit staat, sowie die Leichtflüssigkeit über ein Tauchrohr 27 direkt in einen Leichtflüssigkeitsausgleichsraum 25 gelangt. Dieser Leichtflüssigkeitsausgleichsraum besteht aus zwei miteinander in Verbindung stehenden Kammern, welche im Behälter 210 angeordnet sind. Die weitgehend entmischte Schwerflüssigkeit gelangt über einen Zulaufschacht 24 in den die Abscheidekammer 23 aufweisenden Behälter 210 und überströmt dabei eine Kammer 25 des Leichtflüssigkeitsausgleichsraumes. Sie gelangt in die Abscheidekammer 23, worin der Restabscheidevorgang stattfindet. Von dieser Kammer führt ein Tauchrohr 26 in die überströmte Kammer 25 des Leichtflüssigkeitsausgleichsraumes. Ein nach oben führendes Leichtflüssigkeitsablaufrohr 28 führt die Leichtflüssigkeit über einen Kasten 29 in einen seitlich von der Abscheidekammer 23 angeordneten Leichtflüssigkeitsspeicher 31. Die in der Kammer 23 befindliche Schwerflüssigkeit unterströmt eine Tauchwand 38 und überströmt eine Überlaufwand 39 und gelangt von dort in einen Schwerflüssigkeitsablauf 40, der mit einem geeigneten Ablaufrohr 33 in Verbindung steht, das sich durch den Vorabscheideraum hindurch erstreckt und an das Kanalnetz angeschlossen ist. Am Boden der Abscheidekammer 23 ist eine schiefe Ebene 41 angeordnet, die den Abscheidevorgang begünstigt. Unter der Sohle des Schwerflüssigkeitsablaufes 40 ist ebenfalls eine Kammer des Leichtflüssigkeitsspeichers 31 angeordnet. Ein Rohr 32 stellt die Verbindung zwischen dem Leichtflüssigkeitsausgleichsraum, von dem sich eine weitere Kammer 25 seitlich von der Abscheidekammer befindet, wobei in diese Kammer das vorstehend erwähnte Tauchrohr 27 mündet, und der kleinen Durchtrittsöffnung (nicht gezeigt) an der Sohle des Schwerflüssigkeitsablaufes 40 her.

Ferner ist ein Überlaufrohr 37 vorgesehen, das vom Leichtflüssigkeitsausgleichsraum ausgeht und in eine Schwimmerkammer führt. Ein dort angeordneter Schwimmer 36 betätigt bei entsprechendem Flüssigkeitsstand den eingangs erwähnten Zulaufverschluß 35.

Der vorstehend beschriebene Abscheider funktioniert in entsprechender Weise wie der Abscheider der Figuren5 und 6, wobei hier lediglich die Anordnung des Leichtflüssigkeitsausgleichsraumes und des Leichtflüssigkeitsspeichers vertauscht sind.

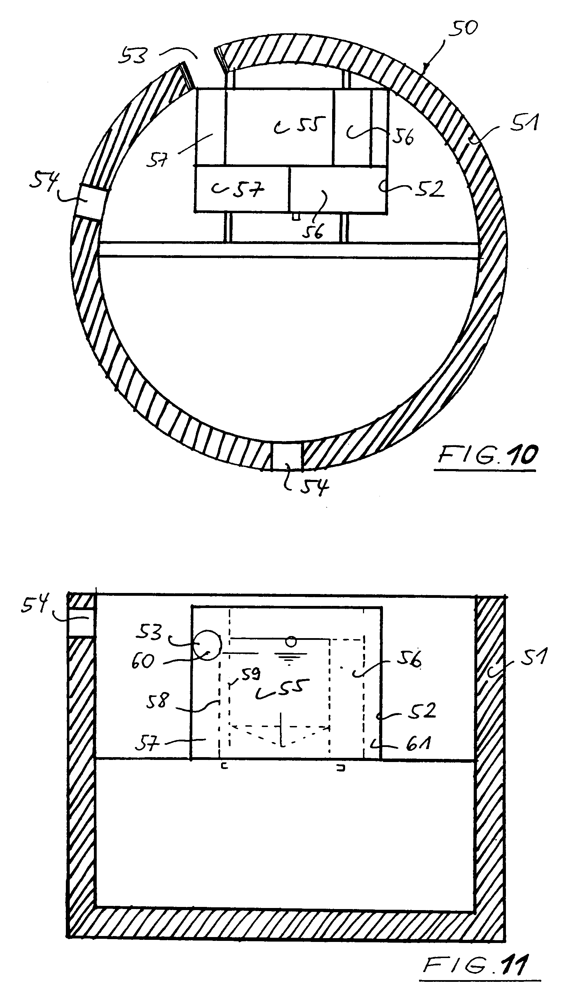

Bei der Ausführungsform der Figuren 10 und 11 ist ein die eigentliche Abscheidekammer 55 aufnehmender Behälter 52 in einem runden Betonbehälter 51 angeordnet, der einen Vorabscheideraum bildet. Der Abscheider 50 weist einen in der Figur seitlich angeordneten Zulauf 54 sowie einen in der Figur unten angeordneten wahlweisen Zulauf 54 auf. Der Schwerflüssigkeitsablauf ist bei 53 dargestellt. Das zuströmende Gemisch wird im Vorabscheideraum getrennt, und die den restlichen Teil der Leichtflüssigkeit mitführende Schwerflüssigkeit gelangt über den Zulaufschacht 61 in die eigentliche Abscheidekammer 55, wobei sie einen Teil des Leichtflüssigkeitsspeichers 56 überströmt. Aus der Kammer 55 gelangt die restliche Leichtflüssigkeit über ein Tauchrohr (nicht gezeigt) in den Leichtflüssigkeitsausgleichsraum 57, in den ebenfalls ein Tauchrohr mündet, das in direkter Verbindung mit dem Vorabscheideraum steht. Auch diese Tauchrohr ist nicht dargestellt. Die Schwerflüssigkeit gelangt aus der Kammer 55 durch Unterströmung einer Tauchwand 59 und Überströmung einer Überlaufwand 58 in einen Schwerflüssigkeitsablauf 53, der wie bei allen anderen Ausführungsformen eine kleine Durchtrittsöffnung 60 aufweist, die mit dem Leichtflüssigkeitsausgleichsraum 57 in Verbindung steht und für die entsprechenden Pumpwirkungen ursächlich ist, die zu einem Abführen der Leichtflüssigkeit in den Leichtflüssigkeitsspeicher 56 führen. Im übrigen funktioniert dieser Abscheider in entsprechender Weise wie die Abscheider der Figuren 5 bis 9.

Nachfolgend sei nochmals kurz auf die Funktionsweise des erfindungsgemäßen Abscheiders eingegangen.

Der abgesenkte Schwerflüssigkeitsspiegel entspricht der Höhe der Leichtflüssigkeitssäule über dem Schwerflüssigkeitsspiegel. Die Säule über dem abgesenkten Schwerflüssigkeitsspiegel beträgt bei einer Dichte der Leichtflüssigkeit von 0,90 10 % der Gesamtsäule. Bei einer Dichte von 0,80 macht die Säule über dem abgesenkten Schwerflüssigkeitsspiegel 20 % der Gesamtsäule aus.

Die Leichtflüssigkeit kann nur dann unter der unteren Kante der Tauchrohre ablaufen, wenn die Säule über dem Schwerflüssigkeitsspiegel etwas überschritten wird (Absenkung geringfügig tiefer oder kürzere Rohrlänge gemäß vorheriger Dichteprüfung). Die Tauchrohre können auch verstellbar angeordnet sein.

Bei den vorstehend beschriebenen Ausführungsbeispielen kann die Leichtflüssigkeit nur im Ruhezustand nach unten ablaufen, d. h. ohne zufließendes Gemisch. Nur nach oben kann die Leichtflüssigkeit von der zufließenden Schwerflüssigkeit bzw. dem steigenden Schwerflüssigkeitsspiegel abgedrückt werden.

Strömende Schwerflüssigkeit tritt im Abscheider nicht auf. In den Tauchrohren selbst ist ausnahmsweise eine Strömung vorhanden, wenn bei Inbetriebnahme größere Schwerflüssigkeitsmengen durch die Tauchrohre strömen und die Leichtflüssigkeit mitreißen. Dies ist aber nur bei der Inbetriebnahme der Fall. Während des Betriebes schwimmt die gesamte Leichtflüssigkeit auf dem höher liegenden Schwerflüssigkeitsspiegel, während der Zufluß darunter stattfindet.

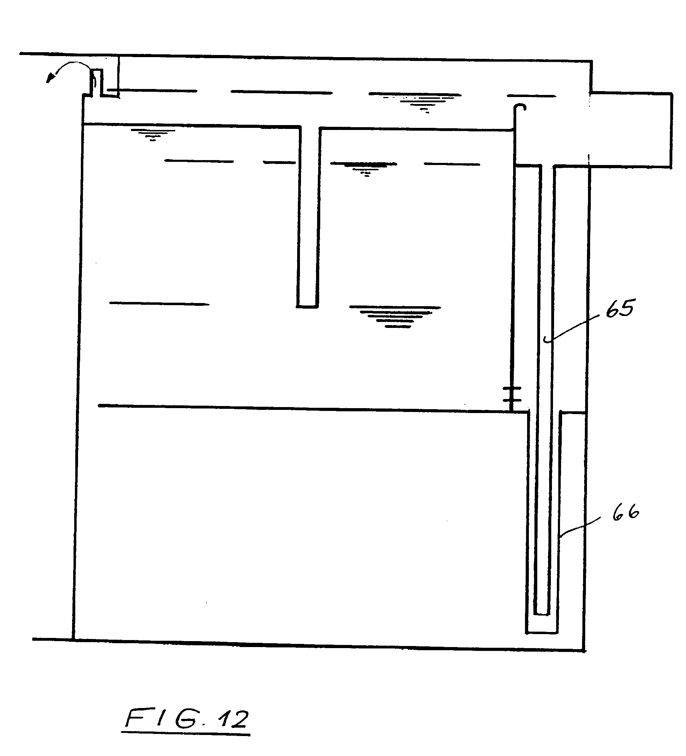

In Figur 12 ist in schematischer Weise ein Schnitt durch einen Abscheider gezeigt, der mit einem speziellen Absenktauchrohr 65 versehen ist. Dieses Tauchrohr 65 hat die Aufgabe, als Sicherheitseinrichtung für solche Fälle zu dienen, bei denen übermäßig viel Leichtflüssigkeit zuströmt, beispielsweise bei einem Ölunfall. Die Wahrscheinlichkeit, daß ein solcher Ölunfall unmittelbar am Abscheider passiert und ausgerechnet zu einer Zuströmung einer übermäßig großen Menge von Leichtflüssigkeit in den Abscheidereinlauf führt, ist relativ gering. Trotzdem sind jedoch erfindungsgemäß entsprechende Maßnahmen vorgesehen, um Umweltschäden zu vermeiden.

Wie Figur 12 zeigt, ist hierbei ein zusätzliches Absenktauchrohr 65 mit einer solchen Länge ausgebildet, daß zufließende Leichtflüssigkeit die Tauchrohrtiefe nie erreichen kann. Das wird dadurch erreicht, daß die Leichtflüssigkeitssäule über dem Schwerflüssigkeitsspiegel so niedrig gehalten wird, daß die Leichtflüssigkeit die Schwerflüssigkeit nicht bis zu dieser Tiefe verdrängen kann. Das Tauchrohr 65 erstreckt sich dabei bis in den Vorabscheideraum (Schlammfang) hinein, wobei es durch den Leichtflüssigkeitsausgleichsbehälter verläuft. Vom Leichtflüssigkeitsausgleichsbehälter erstreckt sich nach unten ein dickeres Rohr 66, das am unteren Ende geschlossen ist und den unteren Teil des Absenktauchrohres 65 aufnimmt.

## Patentansprüche

1. Leichtflüssigkeitsabscheider mit einem Zulauf (2,150,54) für ein Leichtflüssigkeits-Schwerflüssigkeit-Gemisch, mindestens einer dem Zulauf (2,150,54) nachgeordneten Abscheidekammer (3,4,5,400,23,55) für die Leichtflüssigkeit von der Schwerflüssigkeit, einem des Abscheidekammer (3,4,5,400,23,55) nachgeordneten Schwerflüssigkeitsablauf (6,40,53), dem eine Überlaufwand (7,170,39,58) vorgeordnet ist, einem Leichtflüssigkeitsablauf umfassend einen Leichtflüssigkeitsausggleichsraum (18,600,25), ein von einem unterhalb der Überlaufwand (7,170,39,58) gelegenen Punkt der Abscheidekammer nach unten in den Leichtflüssigkeitsausgleichsraum (18,600,25) führendes Tauchrohr (12,90,26,27) und ein vom Leichtflüssigkeitsausgleichsraum (18,600,25) nach oben führendes Leichtflüssigkeitsablaufrohr (13,100,28), sowie einem Leichtflüssigkeitsspeicher (19,70,31), mit dem das Leichtflüssigkeitsablaufrohr (13,100,28) in Verbindung steht, dadurch gekennzeichnet, daß zwischen der Sohle der Schwerflüssigkeitsablaufes (6,40,53) und der Oberkante des Tauchrohre (12,90,26,27) eine den Leichtflüssigkeitsausgleichsraum (18,600,25) mit dem Schwerflüssigkeitsablauf (6,40,53) verbindende kleine Durchtrittsöffnung (17,130,60) angeordnet ist.

2. Leitchtflüssigkeitsabscheider nach Anspruch 1, dadurch gekennzeichnet, daß innerhalb der Leichtflüssigkeitsausgleichsraumes (18) vor der kleinen Durchtrittöffnung (17) eine eine untere Durchflußöffnung vorsehende Tauchwand (21) angeordnet ist.

3. Leichtflüssigkeitabscheider nach einem der vorangehenden Ansprüche, dadurch gekennzeichnet, daß die Oberkante des Tauchrohres (12,90,26,27) unterhalb der Zulaufsohle angeordnet ist.

4. Leichtflüssigkeitsabscheider nach einem der vorangehenden Ansprüche, dadurch gekennzeichnet, daß der Leichtflüssigkeitsausgleichsraum (18) als innerhalb der Abscheidekammer (3) angeordnete abgetrennte Kammer ausgebildet ist, von deren Deckwand das Tauchrohr (12) unten und das Leichtflüssigkeitsablaufrohr (13) nach oben abgehen.

5. Leichtflüssigkeitsabscheider nach Anspruch 4, dadurch gekennzeichnet, daß die den Leichtflüssigkeitsausgleichsraum (18) bildende Kammer an einer Seitenwand des Abscheider (1) angeordnet ist und an eine Stirnwand des Schwerflüssigkeitsablaufes (6) grenzt, in der die kleine Durchtrittsöffnung (17) angeordnet ist.

6. Leichtflüssigkeitsabscheider nach Anspruch 5, dadurch gekennzeichnet, daß der Leichtflüssigkeitsspeicher (19) in Gemisch-Strömungsrichtung hinter dem Leichtflüssigkeitsausgleichsraum (18) an der gleichen Seitenwand des Abscheiders (1) angeordnet ist.

7. Leichtflüssigkeitsabscheider nach einem der vorangehenden Ansprüche, dadurch gekennzeichnet, daß dem Zulauf (2) eine Überlaufwand (10) nachgeordnet ist, deren Überlaufkante unterhalb der Oberkante des Tauchrohres (12) und der Zulaufsohle angeordnet ist.

8. Leichtflüssigkeitsabscheider nach einem der vorangehenden Ansprüche, dadurch gekennzeichnet, daß der Abscheidekammer (3) eine Grobabscheidekammer vorgeordnet ist.

9. Leichtflüssigkeitsabscheider nach einem der vorangehenden Ansprüche, dadurch gekennzeichnet, daß der Abscheidekammer (3) zwei weiter Abscheidekammer vorgeordnet sind, von denen die erste, in die der Zulauf (2) mündet und die durch eine Überlaufwand von der zweiten getrennt ist, als Grobschlammfang (5) und die zweite als Feinschlammfang (4) ausgebildet ist.

10. Leichtflüssigkeitsabscheider nach Anspruch 8 oder 9, dadurch gekennzeichnet, daß zwischen der Abscheidekammer (3) und der vorgeordneten Abscheidekammer eine Überlaufwand (9) angeordnet ist, deren Überlaufkante etwa die gleiche Höhe wie die Sohle der kleinen Durchtrittsöffnung (17) besitzt.

11. Leichtflüssigkeitsabscheider nach einem der vorangehenden Ansprüche, dadurch gekennzeichnet, daß die Oberkante des Tauchrohres (12) über sämtlichen, die Abscheidekammern voneinander trennenden Überlaufwänden (9, 10) liegt, so daß ein gemeinsamer unverdrängbarer Raume unterhalb der Oberkante des Tauchrohres gebildet wird.

12. Leichtflüssigkeitsabscheider nach einem der vorangehenden Ansprüche, dadurch gekennzeichnet, daß die Abscheidekammer (400, 23, 55) in einem Vorabscheideraum, in den der Zulauf (150, 34, 54) mündet, derart angeordnet ist, daß die sich in beiden Bereichen ausbildenden Leichtflüssigkeitsschichten voneinander getrennt sind, und daß sowohl von der Abscheidekammer (400, 23, 55) als auch vom Vorabscheideraum ein Tauchrohr (80, 90; 26, 27) in den Leichtflüssigkeitsausgleichsraum (60, 25, 57) führt.

13. Leichtflüssigkeitsabscheider nach Anspruch 12, dadurch gekennzeichnet, daß die Abscheidekammer (400, 23, 55) in einem den Leichtflüssigkeitsablauf und den Schwerflüssigkeitsablauf (60, 40, 53) mit Überlaufwand (170, 39, 58) enthaltenden Behälter (200, 210, 52) angeordnet ist, der im Vorabscheideraum vorgesehen ist.

14. Leichtflüssigkeitsabscheider nach Anspruch 13, dadurch gekennzeichnet, daß der Behälter (200, 210, 52) derart im Vorabscheideraum angeordnet ist, daß sich sein Boden im Abstand vom Boden des Vorabscheideraumes befindet, und daß der Zulauf zur Abscheidekammer (400, 23, 55) der Behälters von unten aus dem Vorabscheideraum erfolgt.

15. Leichtflüssigkeitsabscheider nach einem der Ansprüche 12 bis 14, dadurch gekennzeichnet, daß der Zulauf in der Vorabscheideraum als erst horizontal und dann nach unten gerichtetes Winkelrohr (150, 34) ausgebildet ist.

16. Leichtflüssigkeitsabscheider nach einem der Ansprüche 12 bis 15, dadurch gekennzeichnet, daß der Zulauf in die Abscheidekammer (400, 23, 55) eine sich über deren Breite im Boden derselben erstreckende Öffnung sowie einen nachfolgenden Schacht (50, 24, 61) mit Überlaufwand aufweist.

17. Leichtflüssigkeitsabscheider nach einem der Ansprüche 13 bis 16, dadurch gekennzeichnet, daß der Leichtflüssigkeitsausgleichsraum (60, 25, 57) im mehrere Teilkammer unterteilt ist, die in dem die Abscheidekammer aufnehmenden Behälter (200, 210, 52) angeordnet sind und insbesonder stromab der Abscheidekammerzulaufs (50, 24, 61) bei Überströmung durch das Gemisch sowie unterhalb der Schwerflüssigkeitsablaufsohle stromab der dem Schwerflüssigkeitsablauf zugeordneten Überlaufwand (170, 39, 58) angeordnet sind.

18. Leichtflüssigkeitsabscheider nach einem der Ansprüche 13 bis 17, dadurch gekennzeichnet, daß auch der Leichtflüssigkeitsspeicher (70, 31, 56) in den die Abscheidekammer aufnehmenden Behälter (200, 210, 52) integriert ist.

19. Leichtflüssigkeitsabscheider nach einem der Ansprüche 12 bis 18, dadurch gekennzeichnet, daß der Vorabscheideraum als Schlammfang ausgebildet ist.

20. Leichtflüssigkeitsabscheider nach einem der Ansprüche 13 bis 19, dadurch gekennzeichnet, daß zumindest ein Teil des Leichtflüssigkeitsausgleichsraumes (60, 25, 57) seitlich vom Behälter (200, 210, 52) vorsteht und eine geschlossene Oberwand aufweist, von der sich das dem Vorabscheideraum zugeordnete Tauchrohr (90, 27) aus nach unten erstreckt.

21. Leichtflüssigkeitsabscheider nach einem der Ansprüche 12 bis 20, dadurch gekennzeichnet, daß das der Abscheidekammer (400) zugeordnete Tauchrohr (80) in einer Ausbuchtung der Abscheidekammer angeordnet ist, die sich über der Oberwand des Leichtflüssigkeitsausgleichraumes (60) befindet.

22. Leichtflüssigkeitsabscheider nach einem der Ansprüche 12 bis 21, dadurch gekennzeichnet, daß der Vorabscheideraum in einen Grobschlamm- und einen Feinschlammfang unterteilt ist.

23. Leichtflüssigkeitsabscheider nach einem der vorangehender Ansprüche, dadurch gekennzeichnet, daß die kleine Durchtrittsöffnung mit einem vom Schwerflüssigkeitsablauf ausgehenden und sich in den Leichtflüssigkeitsausgleichsraum hinein erstreckenden Absenktauchrohr kombiniert ist.

24. Leichtflüssigkeitsabscheider nach einem der vorangehenden Ansprüche, dadurch gekennzeichnet, daß ein zusätzliches Absenktauchrohr (65) vorgesehen ist, das sich so weit nach unten erstreckt, daß zufließende Leichtflüssigkeit nie die Tauchrohrtiefe erreichen kann.

25. Leichtflüssigkeitsabscheider nach Anspruch 23, dadurch gekennzeichnet, daß sich das Absenktauchrohr (65) durch den Ausgleichsbehälter hindurch in den Vorabscheideraum erstreckt und unterhalb des Ausgleichsbehälters in einem von diesem ausgehenden, unten geschlossenen breiteren Rohr (66) verläuft sowie in einem unverdrängbaren Raum endet.

## Claims

1. A light liquid separator comprising an inlet (2, 150, 54) for a mixture including a light liquid and a heavy liquid, at least one separator chamber (3, 4, 5, 400, 23, 55) for the light liquid from the heavy liquid which follows the inlet (2, 150, 54), a heavy liquid outlet (6, 40, 53) following the separator chamber (3, 4, 5, 400, 23, 55) having in front of it an overflow wall (7, 170, 39, 58), a light liquid outlet including a light liquid balance room (18, 600, 25), a dip tube (12, 90, 26, 27) extending from a point of the separator chamber located below the overflow wall (7, 170, 39, 58) downwardly into the light liquid balance room (18, 600, 25),and a light liquid discharge tube (13, 100, 28) extending from the light liquid balance room (18, 600, 25) upwardly,as well as a light liquid reservoir (19, 70, 31) with which the light liquid discharge tube (13, 100, 28) is connected, characterized in that a small flow opening (17, 130, 60) is located between the bottom of the heavy liquid outlet (6, 40, 53) and the upper edge of the dip tube (12, 90, 26, 27), said flow opening connecting the light liquid balance room (18, 600, 25) with the heavy liquid outlet (6, 40, 53).

2. The light liquid separator according to claim 1, characterized in that a dip wall (21) providing a lower flow opening is provided within the light liquid balance room (18) in front of the small flow opening (17).

3. The light liquid separator according to one of the preceding claims, characterized in that the upper edge of the dip tube (12, 90, 26, 27) is located below the bottom of the inlet.

4. The light liquid separator according to one of the preceding claims, characterized in that the light liquid balance room (18) is formed as separated chamber located within the separator chamber (3) and having a top wall from which the dip tube (12) extends downwardly and the light liquid discharge tube (13) extends upwardly.

5. The light liquid separator according to claim 4, characterized in that the chamber forming the light liquid balance room (18) is located at a side wall of the separator (1) and adjoins to a front wall of the heavy liquid oulet (6) in which the small flow opening (17) is located.

6. The light liquid separator according to claim 5, characterized in that the light liquid reservoir (19) is located in the flow direction of the mixture behind the light liquid balance room (18) at the same side wall of the separator (1).

7. The light liquid separator according to one of the preceding claims, characterized in that the inlet (2) is followed by an overflow wall (10) the overflow edge of which is located below the upper edge of the dip tube (12) and the bottom of the inlet.

8. The light liquid separator according to one of the preceding claims, characterized in that a coarse separator chamber is located upstream of said separator chamber (3).

9. The light liquid separator according to one of the preceding claims, characterized in that two additional separator chambers are located upstream of the separator chamber (3) of which the first one, into which the inlet (2) opens and which is separated from the second one by an overflow wall, is formed as coarse sludge chamber (5) and the second one is formed as fine sludge chamber (4).

10. The light liquid separator according to claim 8 or 9, characterized in that an overflow wall (9) is located between the separator chamber (3) and the upstream located separator chamber, said overflow wall (9) having an overflow edge which has substantially the same height as the bottom of the small flow opening (17).

11. The light liquid separator according to one of the preceding claims, characterized in that the upper edge of the dip tube (12) is located above all the overflow walls (9, 10) separating the separator chambers so that a common undisplaceable room is formed below the upper edge of the dip tube.

12. The light liquid separator according to one of the preceding claims, characterized in that the separator chamber (400, 23, 55) is located in a pre-separator room, into which the inlet (150, 34, 54) opens, in such a manner that the light liquid layers forming in both areas are separated from one another,and that a dip tube (80, 90; 26, 27) extends into the light liquid balance room (60, 25, 57) not only from the separator chamber (400, 23, 55) but also from the pre-separator room.

13. The light liquid separator according to claim 12, characterized in that the separator chamber (400, 23, 55) is located within a container (200, 210, 52) which contains the light liquid outlet and the heavy liquid outlet (60, 40, 53) with overflow wall (170, 39, 58) and which is located within the pre-separator room.

14. The light liquid separator according to claim 13, characterized in that the container (200, 210, 52) is located in the pre-separator room in such a manner that its bottom is spaced from the bottom of the pre-separator room and that the flow to the separator chamber (400, 23, 55) of the container occurs from below from the pre-separator room.

15. The light liquid separator according to one of the claims 12 to 14, characterized in that the inlet of the pre-separator room is formed as angled tube (150, 34) which is formed horizontally at first and thereafter is downwardly directed.

16. The light liquid separator according to one of the claims 12 to 15, characterized in that the inlet of the separator chamber (400, 23, 55) includes an opening extending over its width in the bottom thereof and a following sink (50, 24, 61) with overflow wall.

17. The light liquid separator according to one of the claims 13 to 16, characterized in that the light liquid balance room (60, 25, 57) is separated into a plurality of part-chambers which are located in the container (200, 210, 52) including the separator chamber and which are especially located downstream of the inlet (50, 24, 61) of the separator chamber upon overflow through the mixture and below the bottom of the heavy liquid outlet downstream of the overflow wall (170, 39, 58) associated with the heavy liquid outlet.

18. The light liquid separator according to one of the claims 13 to 17, characterized in that also the light liquid reservoir (70, 31, 56) is integrated into the container (200, 210, 52) receiving the separator chamber.

19. The light liquid separator according to one of the claims 12 to 18, characterized in that the pre-separator room is formed as sludge chamber.

20. The light liquid separator according to one of the claims 13 to 19, characterized in that at least a part of the light liquid balance room (60, 25, 57) projects laterally from the container (200, 210, 52) and has a closed upper wall from which the dip tube (90, 27) associated with the pre-separator room extends downwardly.

21. The light liquid separator according to one of the claims 12 to 20, characterized in that the dip tube (80) associated with the separator chamber (400) is located in a bulged portion of the separator chamber which is located above the upper wall of the light liquid balance room (60).

22. The light liquid separator according to one of the claims 12 to 21, characterized in that the pre-separator room is separated into a coarse sludge chamber and a fine sludge chamber.

23. The light liquid separator according to one of the preceding claims, characterized in that the small flow opening is combined with a sink dip tube emanating from the heavy liquid outlet and extending into the light liquid balance room.

24. The light liquid separator according to one of the preceding claims, characterized in that an additional sink dip tube (65) is provided which extends downwardly so far that the incoming light liquid can never reach the depth of the dip tube.

25. The light liquid separator according to claim 23, characterized in that the sink dip tube (65) extends through the balance container into the pre-separator room and is formed by a wider downwardly closed tube (66) below the balance container and emanating therefrom and terminates in an undisplaceable room.

## Revendications

1. Séparateur pour liquide léger, avec une adduction (2, 150, 54) pour un mélange de liquide lourd et de liquide léger, au moins une chambre de séparation (3, 4, 5, 400, 23, 55) disposée en aval de l'induction (2, 150, 54) pour séparer le liquide léger du liquide lourd, une évacuation du liquide lourd (6, 40, 53) disposée en aval de la chambre de séparation (3, 4, 5, 400, 23, 55) devant laquelle est disposée une paroi à débordement (7, 170, 39, 58), une évacuation du liquide léger comprenant une enceinte d'équilibrage du liquide léger (18, 600, 25), un tube plongeur (12, 90, 26, 27) allant d'un point de la chambre de séparation située en dessous de la paroi à débordement (7, 170, 39, 58), vers le bas, dans la chambre d'équilibrage du liquide léger (18, 600, 25), et un tube d'évacuation du liquide léger (13, 100, 28) allant de la chambre d'équilibrage du liquide léger (18, 600, 25) vers le haut ainsi qu'un accumulateur à liquide léger (19, 70, 31) avec lequel le tube d'évacuation du liquide léger (13, 100, 28) est en liaison, caractérisé en ce qu'entre le fond de l'évacuation du liquide lourd (6, 40, 53) et le bord supérieur du tube plongeur (12, 90, 26, 27) est disposé un petit orifice de passage (17, 130, 60) reliant l'enceinte d'équilibrage du liquide léger (18, 600, 25) à l'évacuation du liquide lourd (6, 40, 53).

2. Séparateur pour liquide léger selon la revendication 1, caractérisé en ce qu'une paroi plongeante (21) pourvue d'un orifice de passage inférieur, est disposée dans l'enceinte d'équilibrage du liquide léger (18) avant le petit orifice de passage (17).

3. Séparateur pour liquide léger selon l'une des revendications précédentes, caractérisé en ce que le bord supérieur du tube plongeur (12, 90, 26, 27) est disposé en dessous du fond de l'adduction.

4. Séparateur pour liquide léger selon l'une des revendications précédentes, caractérisé en ce que l'enceinte d'équilibrage du liquide léger (18) est constituée sous forme d'une chambre séparée disposée à l'intérieur de la chambre de séparation (3), dont la cloison de fermeture supérieure supporte le tube plongeur (12) dirigé vers le bas et le tube d'évacuation du liquide léger (13) dirigé vers le haut.

5. Séparateur pour liquide léger selon la revendication 4, caractérisé en ce que la chambre formant l'enceinte d'équilibrage du liquide léger (18) est disposée sur une paroi latérale du séparateur (1) et avoisine une paroi frontale de l'évacuation du liquide lourd (6) dans laquelle est disposée le petit orifice de passage (17).

6. Séparateur pour liquide léger selon la revendication 5, caractérisé en ce que l'accumulateur à liquide léger (19) est disposé dans la direction d'écoulement du mélange derrière l'enceinte d'équilibrage du liquide léger (18) et sur la même paroi latérale du séparateur (1).

7. Séparateur pour liquide léger selon l'une des revendications précédentes, caractérisé en ce que l'adduction (2) est située avant une paroi de débordement (10) dont le bord de débordement est disposé en dessous du bord supérieur du tube plongeur (12) et du fond de l'adduction.

8. Séparateur pour liquide léger selon l'une des revendications précédentes, caractérisé en ce que la chambre de séparation (3) est précédée par une chambre de séparation grossière.

9. Séparateur pour liquide léger selon l'une des revendications précédentes, caractérisé en ce que la chambre de séparation (3) est précédée par deux autres chambres de séparation dont la première débouche dans l'adduction (2) et est séparée par une paroi de débordement de la deuxième, cette première chambre servant à la collecte des poussières (5), tandis que la deuxième chambre sert à la collecte des boues fines (4).

10. Séparateur à liquide léger selon la revendication 8 ou 9, caractérisé en ce qu'entre la chambre de séparation (3) et la chambre de séparation montée en amont de celle-ci, est disposée une paroi de débordement (9) dont le bord de débordement présente, à peu près la même hauteur que le fond du petit orifice de passage (17).

11. Séparateur à liquide léger selon l'une des revendications précédentes, caractérisé en ce que le bord supérieur du tube plongeur (12) est situé au-dessus de toutes les parois de débordement (19) séparant les unes des autres les chambres de séparation, si bien qu'un espace commun non évacuable est formé en dessous du bord supérieur du tube plongeur.

12. Séparateur à liquide léger selon l'une des revendications précédentes, caractérisé en ce que la chambre de séparation (400, 23, 55) est disposé dans une chambre de préséparation, dans laquelle débouche l'adduction (150, 34, 54), de façon à ce que les couches de liquide léger se formant dans les deux zones soient séparées l'une de l'autre et qu'un tube plongeur (80, 90, 26, 27) pénètre dans l'enceinte d'équilibrage du liquide léger (60, 25, 57) depuis la chambre de séparation (400, 23, 55) ainsi que depuis la chambre de préséparation.

13. Séparateur à liquide léger selon la revendication 12, caractérisé en ce que la chambre de séparation (400, 23, 55) est disposée dans un réservoir (200, 210, 52) contenant l'évacuation du liquide léger et l'évacuation du liquide lourd (60, 40, 53) avec la paroi de débordement (170, 39, 58), ce réservoir étant disposé dans la chambre de préséparation.

14. Séparateur à liquide léger selon la revendication 13, caractérisé en ce que le réservoir (200, 210, 52) est disposé dans la chambre de préséparation, de façon à ce que son fond se trouve à une certaine distance du fond de la chambre de préséparation et en ce que l'adduction vers la chambre de séparation (400, 23, 55) du réservoir provient du bas et de la chambre de préséparation.

15. Séparateur à liquide léger selon l'une des revendications 12 à 14, caractérisé en ce que l'adduction dans la chambre de préséparation se présente sous la forme d'un tube coudé (150, 34) tout d'abord horizontal et dirigé ensuite vers le bas.

16. Séparateur à liquide léger selon l'une des revendications 12 à 15, caractérisé en ce que l'adduction dans la chambre de séparation (400, 23 55) présente un orifice s'étendant sur la largeur de celle-ci dans le fond de celle-ci, ainsi qu'un puits situé en aval (50, 24, 61) avec une paroi de débordement.

17. Séparateur à liquide léger selon l'une des revendications 13 à 16, caractérisé en ce que l'enceinte d'équilibrage du liquide léger (60, 25, 57) est subdivisée en plusieurs chambres partielles qui sont disposées dans le réservoir (200, 210, 52) contenant la chambre de séparation et, en particulier, en aval de l'adduction de la chambre de séparation (50, 24, 61) en cas de recouvrement par le mélange ainsi qu'en dessous du fond de l'évacuation du liquide lourd en avant de la cloison de débordement (170, 39, 58) correspondant à l'évacuation du liquide lourd.

18. Séparateur à liquide léger selon l'une des revendications 13 à 17, caractérisé en ce que l'accumulateur à liquide léger (70, 31, 56) est également intégré dans le réservoir (200, 210, 52) contenant la chambre de séparation.

19. Séparateur à liquide léger selon l'une des revendications 12 à 18, caractérisé en ce que la chambre de préséparation se présente sous forme d'une chambre de collecte de boues.

20. Séparateur à liquide léger selon l'une des revendications 13 à 19, caractérisé en ce qu'au moins une partie de la chambre d'équilibrage du liquide léger (60, 25, 57) fait saillie latéralement par rapport au réservoir (200, 210, 52) et présente une paroi supérieure fermée d'où le tube plongeur (90, 27) correspondant à la chambre de préséparation s'étend vers le bas.

21. Séparateur à liquide léger selon l'une des revendications 12 à 20, caractérisé en ce que le tube plongeur (80) correspondant à la chambre de séparation (400) est disposé dans une indentation de la chambre de séparation qui se trouve au-dessus de la paroi supérieure de la chambre d'équilibrage du liquide léger (60).

22. Séparateur à liquide léger selon l'une des revendications 12 à 21, caractérisé en ce que la chambre de préséparation est subdivisée en une chambre de collecte des boues grossières et une chambre de collecte des boues fines.

23. Séparateur à liquide léger selon l'une des revendications précédentes, caractérisé en ce que le petit orifice de passage est combiné avec un tube plongeur descendant partant de l'évacuation du liquide lourd et s'étendant jusque dans la chambre d'équilibrage du liquide léger.

24. Séparateur à liquide léger selon l'une des revendications précédentes, caractérisé en ce qu'un tube plongeur descendant (65) supplémentaire est prévu et s'étend suffisamment loin vers le bas pour que le liquide léger entrant ne puisse jamais atteindre la profondeur du tube plongeur.

25. Séparateur à liquide léger selon la revendication 23, caractérisé en ce que le tube plongeur descendant (65) s'étend à travers le réservoir d'équilibrage dans la chambre de préséparation et se prolonge en dessous du réservoir d'équilibrage par un tube (66) plus large partant de ce réservoir et fermé vers le bas en se terminant par une enceinte non évacuable.
